(19) **Europäisches Patentamt / European Patent Office / Office européen des brevets**

(11) **EP 4 572 472 A1**

(12) **EUROPEAN PATENT APPLICATION**
published in accordance with Art. 153(4) EPC

(43) Date of publication:
**18.06.2025 Bulletin 2025/25**

(21) Application number: **23853090.1**

(22) Date of filing: **11.08.2023**

(51) International Patent Classification (IPC):
**H04W 72/04** *(2023.01)*    **H04W 72/23** *(2023.01)*
**H04L 27/26** *(2006.01)*    **H04W 88/02** *(2009.01)*

(52) Cooperative Patent Classification (CPC):
**H04L 27/26; H04W 72/04; H04W 72/23;**
**H04W 88/02**

(86) International application number:
**PCT/KR2023/011969**

(87) International publication number:
**WO 2024/035224 (15.02.2024 Gazette 2024/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **11.08.2022 KR 20220100958**

(71) Applicant: **LG Electronics Inc.**
**Yeongdeungpo-gu**
**Seoul 07336 (KR)**

(72) Inventors:
• **KIM, Jaehyung**
  **Seoul 06772 (KR)**

• **LEE, Youngdae**
  **Seoul 06772 (KR)**
• **AHN, Seungjin**
  **Seoul 06772 (KR)**
• **YANG, Suckchel**
  **Seoul 06772 (KR)**
• **KIM, Seonwook**
  **Seoul 06772 (KR)**
• **LEE, Sunghoon**
  **Seoul 06772 (KR)**

(74) Representative: **Frenkel, Matthias Alexander**
**Wuesthoff & Wuesthoff**
**Patentanwälte und Rechtsanwalt PartG mbB**
**Schweigerstraße 2**
**81541 München (DE)**

(54) **METHOD, USER EQUIPMENT AND PROCESSING DEVICE, WHICH RECEIVE DOWLINK SIGNAL, STORAGE MEDIUM, AND METHOD AND BASE STATION FOR TRANSMITTING DOWNLINK SIGNAL**

(57) A downlink signal transmission method, according to embodiments, by which a base station transmits a downlink signal in a wireless communication system comprises: determining a maximum transmission bandwidth for a UE channel bandwidth for a cell; and transmitting, on the cell, a physical downlink control channel and a physical downlink shared channel, wherein: on the basis of the physical downlink control channel and/or the physical downlink shared channel, information related to the determined maximum transmission bandwidth and a part of the downlink signal are excluded from the transmission, or information indicating that a terminal excludes a part of an uplink signal from the transmission is transmitted; and the maximum transmission bandwidth is determined to be a value larger than a specific value previously defined on the basis of a sub carrier spacing (SCS) and a terminal channel bandwidth. The downlink signal reception method, according to embodiments, by which a terminal receives a downlink signal in a wireless communication system comprises: receiving a physical downlink control channel and a physical downlink shared channel on a cell; and receiving, on the basis of the physical downlink control channel and/or the physical downlink shared channel, information related to a maximum transmission bandwidth and information indicating that a part of a downlink signal is excluded from the transmission or that the terminal excludes a part of an uplink signal from the transmission, wherein the maximum transmission bandwidth is determined to be a value larger than a specific value previously defined on the basis of a sub carrier spacing (SCS) and a terminal channel bandwidth.

# FIG. 18

Receive physical downlink control channel and physical downlink shared channel ——— S1800

Receive, based on at least one of physical downlink control channel or physical downlink shared channel, information related to maximum transmission bandwidth and information indicating that part of downlink signal is excluded from transmission or that UE excludes part of uplink signal from the transmission ——— S1801

**Description**

[Technical Field]

Embodiments related to a wireless communication system.

[Background Art]

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system. There is a need for a method to support device types with different device bandwidth capabilities.

[Disclosure]

[Technical Problem]

As new radio communication technology has been introduced, the number of UEs to which a base station (BS) should provide services in a predetermined resource region is increasing and the volume of data and control information that the BS transmits/receives to/from the UEs to which the BS provides services is also increasing. Since the amount of resources available to the BS for communication with the UE(s) is limited, a new method for the BS to efficiently receive/transmit uplink/downlink data and/or uplink/downlink control information from/to the UE(s) using the limited radio resources is needed. In other words, due to increase in the density of nodes and/or the density of UEs, a method for efficiently using high-density nodes or high-density UEs for communication is needed.

Embodiments provide a method, user equipment, processing device, and storage medium for receiving downlink signals to efficiently receive/transmit uplink/downlink data and/or uplink/downlink control information from/to user equipment(s) (UE(s)), and a method and base station for transmitting downlink signals.

The technical scope of the embodiments is not limited to the aforementioned technical objects, and may cover other technical objects that may be inferred by those skilled in the art based on the entirety of the disclosure.

[Technical Solution]

According to embodiments, a method of transmitting a downlink signal by a base station in a wireless communication system includes determining a maximum transmission bandwidth for a user equipment (UE) channel bandwidth for a cell, and transmitting a physical downlink control channel and a physical downlink shared channel on the cell, wherein, based on at least one of the physical downlink control channel or the physical downlink shared channel, information related to the determined maximum transmission bandwidth and information indicating that part of the downlink signal is excluded from the transmission or that a UE excludes part of an uplink signal from the transmission are transmitted, wherein the maximum transmission bandwidth is determined to be a value greater than a predefined specific value based on the UE channel bandwidth and subcarrier spacings (SCSs). According to embodiments, a method of receiving a downlink signal by a UE in a wireless communication system includes receiving a physical downlink control channel and a physical downlink shared channel on a cell, and receiving, based on at least one of the physical downlink control channel or the physical downlink shared channel, information related to a maximum transmission bandwidth and information indicating that part of the downlink signal is excluded from transmission or that the UE excludes part of an uplink signal from the transmission, wherein the maximum transmission bandwidth is determined to be a value greater than a predefined specific value based on the UE channel bandwidth and SCSs.

These solutions are merely some of the examples of the present disclosure, and various examples reflecting the technical features of the present disclosure may be derived and understood by those skilled in the art based on the following detailed description.

[Advantageous Effects]

Methods and devices according to embodiments may efficiently transmit and receive wireless communication signals.

Methods and devices according to embodiments may increase the overall throughput of a wireless communication system.

The effects of embodiments are not limited to those mentioned above, and other effects not explicitly stated will become apparent to those skilled in the art to which this disclosure pertains from the following detailed description.

[Description of Drawings]

The accompanying drawings, which are included to provide a further understanding of the disclosure and are incorporated in and constitute a part of this application, illustrate embodiment(s) of the present disclosure and together with the description serve to explain the principle of the present disclosure. For a better understanding of the various embodiments described below, the following description of the embodiments should be read in conjunction with the accompanying drawings, which include corresponding parts with like reference numbers throughout the drawings. In the drawings:

FIG. 1 illustrates a communication system according to embodiments;
FIG. 2 illustrates wireless devices according to embodiments;
FIG. 3 illustrates a signal processing circuit for transmitting signals according to embodiments;
FIG. 4 illustrates an example of utilizing wireless devices according to the embodiments;
FIG. 5 illustrates an example of a hand-held device according to embodiments;
FIG. 6 illustrates a vehicle or self-driving vehicle to which methods/devices according to embodiments are applied;
FIG. 7 illustrates an example virtual reality (AR)/augmented reality (VR) and vehicle to which methods/devices according to embodiments are applied;
FIG. 8 illustrates an example eXtended Reality (XR) device to which methods/devices according to embodiments are applied;
FIG. 9 illustrates an example robot to which methods/devices according to embodiments may be applied;
FIG. 10 illustrates an example artificial intelligence (AI) device to which methods/devices according to embodiments may be applied;
FIG. 11 illustrates an NR frame structure according to embodiments;
FIG. 12 illustrates an NR resource grid according to embodiments;
FIG. 13 illustrates a 3GPP signal transmission and/or reception method according to embodiments;
FIG. 14 illustrates the structure of a synchronization signal block (SSB) according to embodiments;
FIG. 15 illustrates an example of SSB transmission according to embodiments;
FIG. 16 illustrates an example of a random access procedure according to embodiments;
FIG. 17 illustrates a 2-step RACH according to embodiments;
FIG. 18 illustrates an example flow of UL signal transmission by a UE according to embodiments; and
FIG. 19 illustrates an example flow of DL signal transmission by a BS according to embodiments.

[Best Mode]

Preferred embodiments of the embodiments will be described in detail, examples of which are shown in the accompanying drawings. The following detailed description with reference to the accompanying drawings is intended to illustrate preferred embodiments of the embodiments rather than to present only embodiments that can be implemented in accordance with the embodiments. The following detailed description includes details to provide a thorough understanding of the embodiments. However, it will be apparent to those skilled in the art that embodiments can be practiced without these details.

Most of the terms used in the embodiments have been selected from those commonly used in the art, but some terms have been arbitrarily selected by the applicant, with their meanings detailed in the following description as needed. Therefore, the embodiments should be understood based on the intended meanings of the terms rather than their simple names or meanings.

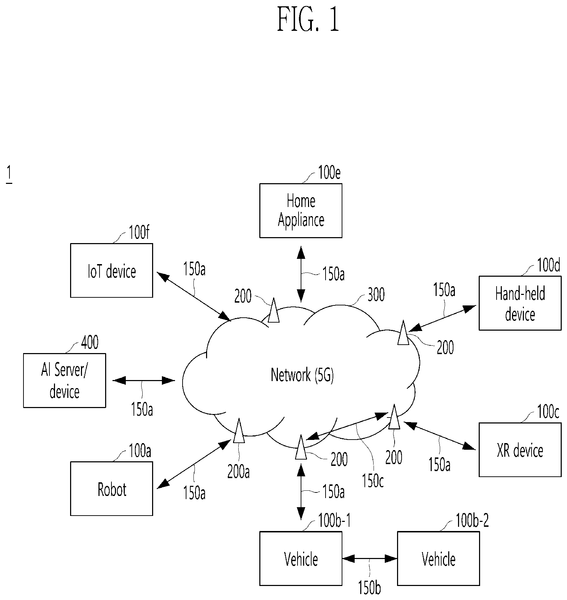

FIG. 1 illustrates a communication system according to embodiments.

FIG. 1 illustrates an example communication system including a method, user equipment, processing device, and storage medium for receiving a downlink signal, and a method and a base station for transmitting a downlink signal according to embodiments. Various descriptions, features, procedures, proposals, methods, and/or flowcharts of operations in accordance with embodiments are applicable to a wide range of fields requiring wireless communication/-connections (e.g., 5G) between devices.

Hereinafter, examples will be more specifically described with reference to the drawings. In the following drawings/descriptions, the same reference numerals may represent the same or corresponding hardware blocks, software blocks, or functional blocks, unless otherwise stated.

Referring to FIG. 1, a communication system 1 applied to embodiments includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/-radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication(e.g. relay, Integrated Access Backhaul(IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of embodiments.

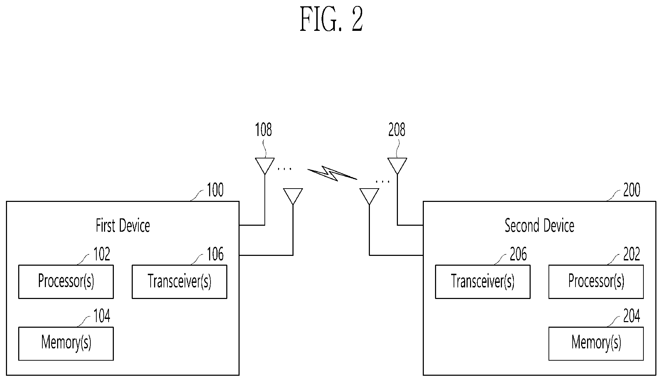

FIG. 2 illustrates wireless devices according to embodiments.

Referring to FIG. 2, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. W1.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In embodiments, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In embodiments, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, instructions, and/or a set of instructions.

The one or more memories 104 and 204 may be connected to the one or more processors 102 and 202 and store various types of data, signals, messages, information, programs, code, instructions, and/or commands. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

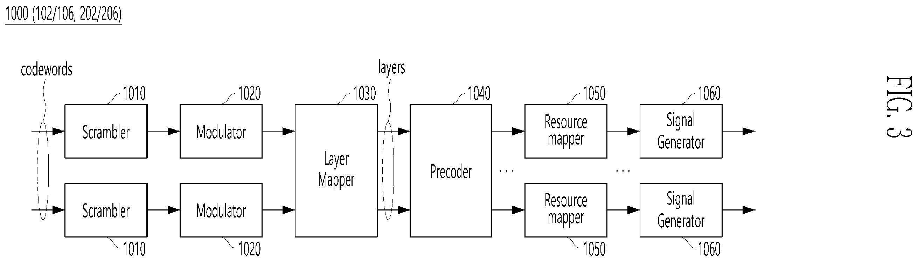

FIG. 3 illustrates a signal processing circuit for transmitting signals according to embodiments.

Referring to FIG. 3, a signal processing circuit 1000 may include scramblers 1010, modulators 1020, a layer mapper 1030, a precoder 1040, resource mappers 1050, and signal generators 1060. An operation/function of FIG. 3 may be performed, without being limited to, the processors 102 and 202 and/or the transceivers 106 and 206 of FIG. 2. Hardware elements of FIG. 3 may be implemented by the processors 102 and 202 and/or the transceivers 106 and 206 of FIG. 2. For example, blocks 1010 to 1060 may be implemented by the processors 102 and 202 of FIG. 2. Alternatively, the blocks 1010 to 1050 may be implemented by the processors 102 and 202 of FIG. and the block 1060 may be implemented by the transceivers 106 and 206 of FIG. 2.

Codewords may be converted into radio signals via the signal processing circuit 1000 of FIG. 3. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 3. For example, the wireless devices (e.g., 100 and 200 of FIG. 1) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

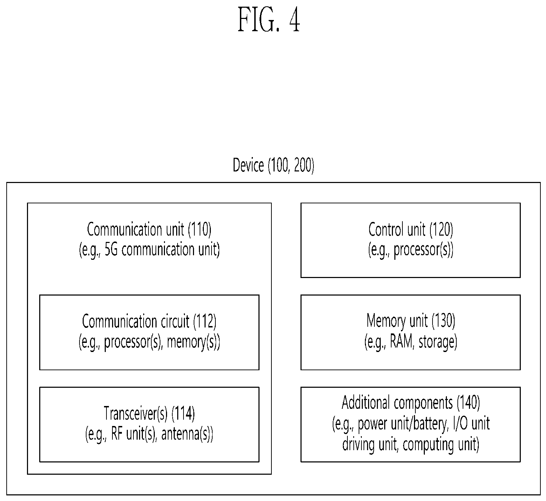

FIG. 4 illustrates an example of utilizing wireless devices according to the embodiments.

FIG. 4 illustrates an example of wireless devices to which methods/devices according to embodiments are applied. The wireless device may be implemented in various forms depending on the use cases/services (see FIG. 1 and FIGS. 5 to 10).

Referring to FIG. 4, wireless devices 100 and 200 may correspond to the wireless devices 100 and 200 of FIG. 2 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 2. For example, the transceiver(s) 114 may include the one or more transceivers 106 and 206 and/or the one or more antennas 108 and 208 of FIG. 2. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 1), the vehicles (100b-1 and 100b-2 of FIG. 1), the XR device (100c of FIG. 1), the hand-held device (100d of FIG. 1), the home appliance (100e of FIG. 1), the IoT device (100f of FIG. 1), a digital broadcast terminal, a hologram device, a public safety device, an MTC device, a medicine device, a fintech device (or a finance device), a security device, a climate/environment device, the AI server/device (400 of FIG. 1), the BSs (200 of FIG. 1), a network node, etc. The wireless device may be used in a mobile or fixed place according to a use-example/service.

In FIG. 4, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 4 will be described in detail with reference to the drawings.

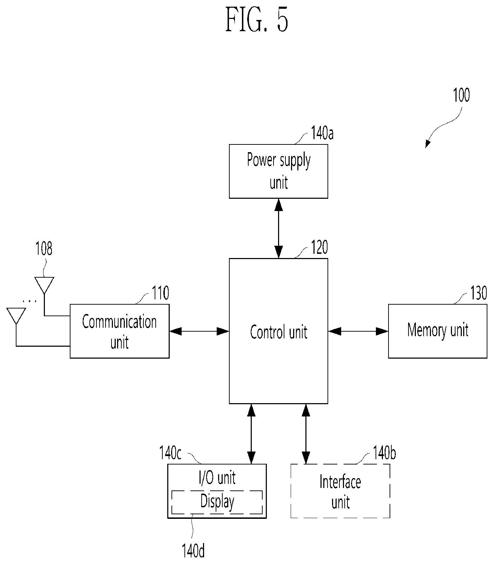

FIG. 5 illustrates an example of a hand-held device according to embodiments.

FIG. 5 illustrates a hand-held device applied to the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT).

Referring to FIG. 5, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 4, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/-signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

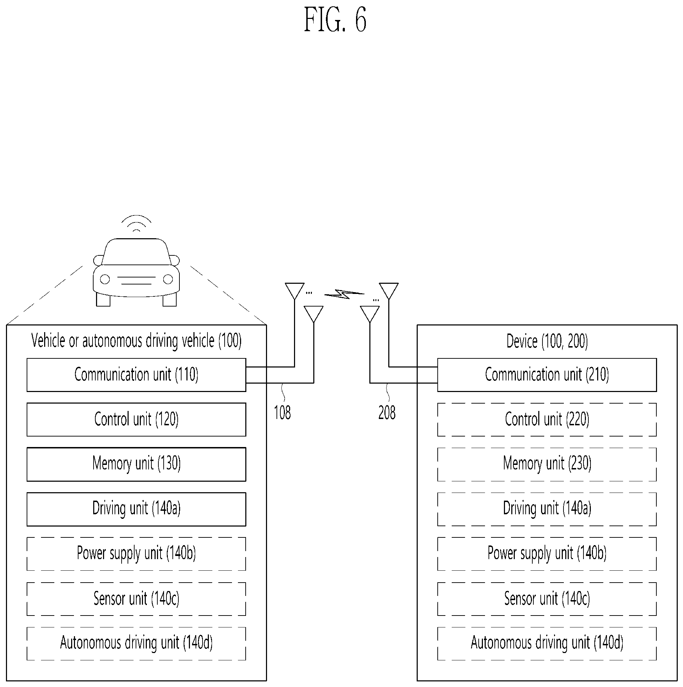

FIG. 6 illustrates a vehicle or self-driving vehicle to which methods/devices according to embodiments are applied.

FIG. 6 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 6, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 4, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

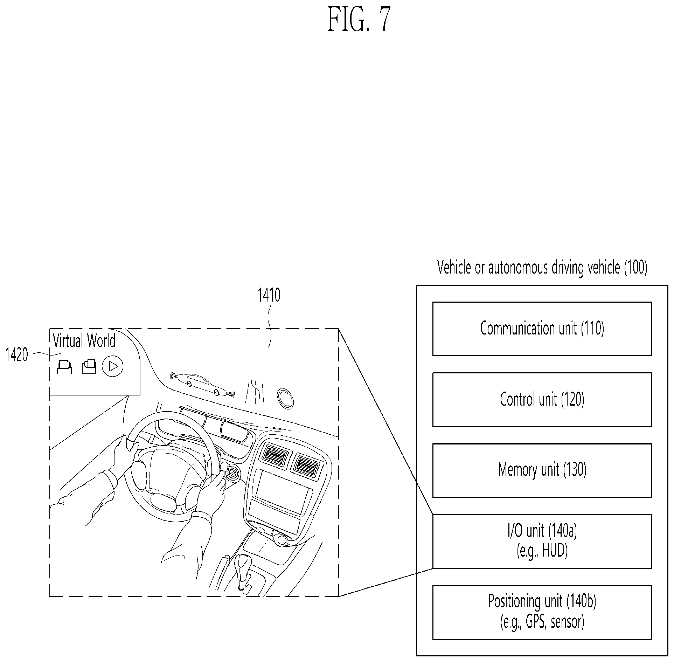

FIG. 7 illustrates an example virtual reality (AR)/augmented reality (VR) and vehicle to which methods/devices according to embodiments are applied.

FIG. 7 illustrates a vehicle applied to the present disclosure. The vehicle may be implemented as a transport means, an aerial vehicle, a ship, etc.

Referring to FIG. 7, a vehicle 100 may include a communication unit 110, a control unit 120, a memory unit 130, an I/O unit 140a, and a positioning unit 140b. Herein, the blocks 110 to 130/140a and 140b correspond to blocks 110 to 130/140 of FIG. 4.

The communication unit 110 may transmit and receive signals (e.g., data and control signals) to and from external devices such as other vehicles or BSs. The control unit 120 may perform various operations by controlling constituent elements of the vehicle 100. The memory unit 130 may store data/parameters/programs/code/commands for supporting various functions of the vehicle 100. The I/O unit 140a may output an AR/VR object based on information within the memory unit 130. The I/O unit 140a may include an HUD. The positioning unit 140b may acquire information about the position of the vehicle 100. The position information may include information about an absolute position of the vehicle 100, information about the position of the vehicle 100 within a traveling lane, acceleration information, and information about the position of the vehicle 100 from a neighboring vehicle. The positioning unit 140b may include a GPS and various sensors.

As an example, the communication unit 110 of the vehicle 100 may receive map information and traffic information from an external server and store the received information in the memory unit 130. The positioning unit 140b may obtain the vehicle position information through the GPS and various sensors and store the obtained information in the memory unit 130. The control unit 120 may generate a virtual object based on the map information, traffic information, and vehicle position information and the I/O unit 140a may display the generated virtual object in a window in the vehicle (1410 and 1420). The control unit 120 may determine whether the vehicle 100 normally drives within a traveling lane, based on the vehicle position information. If the vehicle 100 abnormally exits from the traveling lane, the control unit 120 may display a warning on the window in the vehicle through the I/O unit 140a. In addition, the control unit 120 may broadcast a warning message regarding driving abnormity to neighboring vehicles through the communication unit 110. According to situation, the control unit 120 may transmit the vehicle position information and the information about driving/vehicle abnormality to related organizations.

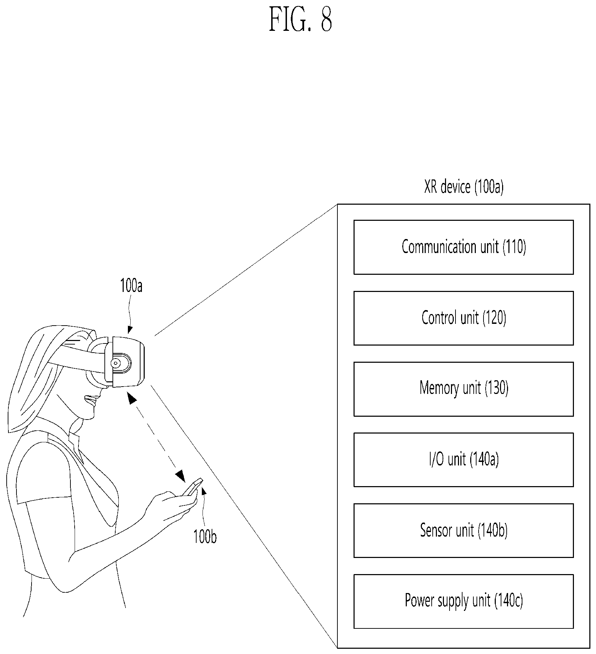

FIG. 8 illustrates an example eXtended Reality (XR) device to which methods/devices according to embodiments are applied.

Referring to FIG. 8, an XR device 100a may include a communication unit 110, a control unit 120, a memory unit 130, an I/O unit 140a, a sensor unit 140b, and a power supply unit 140c. Herein, the blocks 110 to 130/140a to 140c correspond to the blocks 110 to 130/140 of FIG. 4, respectively.

The communication unit 110 may transmit and receive signals (e.g., media data and control signals) to and from external devices such as other wireless devices, hand-held devices, or media servers. The media data may include video, images, and sound. The control unit 120 may perform various operations by controlling constituent elements of the XR device 100a. For example, the control unit 120 may be configured to control and/or perform procedures such as video/image acquisition, (video/image) encoding, and metadata generation and processing. The memory unit 130 may store data/parameters/programs/code/commands needed to drive the XR device 100a/generate XR object. The I/O unit 140a may obtain control information and data from the exterior and output the generated XR object. The I/O unit 140a may include a camera, a microphone, a user input unit, a display unit, a speaker, and/or a haptic module. The sensor unit 140b may obtain an XR device state, surrounding environment information, user information, etc. The sensor unit 140b may include a proximity sensor, an illumination sensor, an acceleration sensor, a magnetic sensor, a gyro sensor, an inertial sensor, an RGB sensor, an IR sensor, a fingerprint recognition sensor, an ultrasonic sensor, a light sensor, a microphone and/or a radar. The power supply unit 140c may supply power to the XR device 100a and include a wired/wireless charging circuit, a battery, etc.

For example, the memory unit 130 of the XR device 100a may include information (e.g., data) needed to generate the XR object (e.g., an AR/VR/MR object). The I/O unit 140a may receive a command for manipulating the XR device 100a from a user and the control unit 120 may drive the XR device 100a according to a driving command of a user. For example, when a user desires to watch a film or news through the XR device 100a, the control unit 120 transmits content request information to another device (e.g., a hand-held device 100b) or a media server through the communication unit 130. The communication unit 130 may download/stream content such as films or news from another device (e.g., the hand-held device 100b) or the media server to the memory unit 130. The control unit 120 may control and/or perform procedures such as video/image acquisition, (video/image) encoding, and metadata generation/processing with respect to the content and generate/output the XR object based on information about a surrounding space or a real object obtained through the I/O unit 140a/sensor unit 140b.

The XR device 100a may be wirelessly connected to the hand-held device 100b through the communication unit 110 and the operation of the XR device 100a may be controlled by the hand-held device 100b. For example, the hand-held device 100b may operate as a controller of the XR device 100a. To this end, the XR device 100a may obtain information about a 3D position of the hand-held device 100b and generate and output an XR object corresponding to the hand-held device 100b.

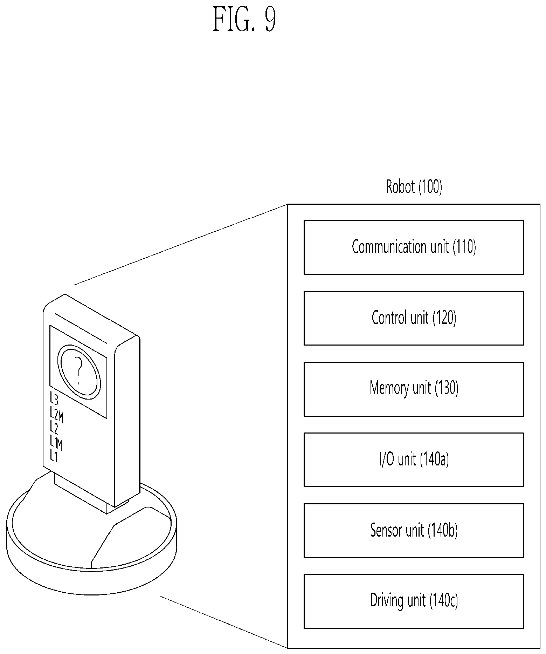

FIG. 9 illustrates an example robot to which methods/devices according to embodiments may be applied.

FIG. 9 illustrates a robot applied to the present disclosure. The robot may be categorized into an industrial robot, a medical robot, a household robot, a military robot, etc., according to a used purpose or field.

Referring to FIG. 9, a robot 100 may include a communication unit 110, a control unit 120, a memory unit 130, an I/O unit 140a, a sensor unit 140b, and a driving unit 140c. Herein, the blocks 110 to 130/140a to 140c correspond to the blocks 110 to 130/140 of FIG. 4, respectively.

The communication unit 110 may transmit and receive signals (e.g., driving information and control signals) to and from external devices such as other wireless devices, other robots, or control servers. The control unit 120 may perform various operations by controlling constituent elements of the robot 100. The memory unit 130 may store data/parameters/programs/code/commands for supporting various functions of the robot 100. The I/O unit 140a may obtain information from the exterior of the robot 100 and output information to the exterior of the robot 100. The I/O unit 140a may include a camera, a microphone, a user input unit, a display unit, a speaker, and/or a haptic module. The sensor unit 140b may obtain internal information of the robot 100, surrounding environment information, user information, etc. The sensor unit 140b may include a proximity sensor, an illumination sensor, an acceleration sensor, a magnetic sensor, a gyro sensor, an inertial sensor, an IR sensor, a fingerprint recognition sensor, an ultrasonic sensor, a light sensor, a microphone, a radar, etc. The driving unit 140c may perform various physical operations such as movement of robot joints. In addition, the driving unit 140c may cause the robot 100 to travel on the road or to fly. The driving unit 140c may include an actuator, a motor, a wheel, a brake, a propeller, etc.

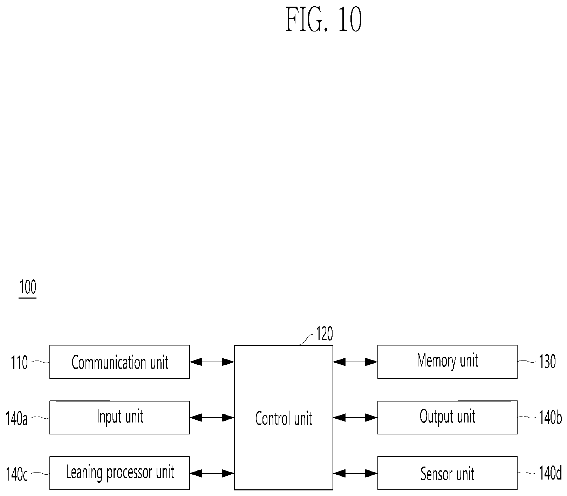

FIG. 10 illustrates an example artificial intelligence (AI) device to which methods/devices according to embodiments may be applied.

FIG. 10 illustrates an AI device applied to the present disclosure. The AI device may be implemented by a fixed device or a mobile device, such as a TV, a projector, a smartphone, a PC, a notebook, a digital broadcast terminal, a tablet PC, a wearable device, a Set Top Box (STB), a radio, a washing machine, a refrigerator, a digital signage, a robot, a vehicle, etc.

Referring to FIG. 10, an AI device 100 may include a communication unit 110, a control unit 120, a memory unit 130, an I/O unit 140a/140b, a learning processor unit 140c, and a sensor unit 140d. The blocks 110 to 130/140a to 140d correspond to blocks 110 to 130/140 of FIG. 4, respectively.

The communication unit 110 may transmit and receive wired/radio signals (e.g., sensor information, user input, learning models, or control signals) to and from external devices such as other AI devices (e.g., 100x, 200, or 400 of FIG. W1) or an AI server (e.g., 400 of FIG. W1) using wired/wireless communication technology. To this end, the communication unit 110 may transmit information within the memory unit 130 to an external device and transmit a signal received from the external device to the memory unit 130.

The control unit 120 may determine at least one feasible operation of the AI device 100, based on information which is determined or generated using a data analysis algorithm or a machine learning algorithm. The control unit 120 may perform an operation determined by controlling constituent elements of the AI device 100. For example, the control unit 120 may request, search, receive, or use data of the learning processor unit 140c or the memory unit 130 and control the constituent elements of the AI device 100 to perform a predicted operation or an operation determined to be preferred among at least one feasible operation. The control unit 120 may collect history information including the operation contents of the AI device 100 and operation feedback by a user and store the collected information in the memory unit 130 or the learning processor unit 140c or transmit the collected information to an external device such as an AI server (400 of FIG. 1). The collected history information may be used to update a learning model.

The memory unit 130 may store data for supporting various functions of the AI device 100. For example, the memory unit 130 may store data obtained from the input unit 140a, data obtained from the communication unit 110, output data of the learning processor unit 140c, and data obtained from the sensor unit 140. The memory unit 130 may store control information and/or software code needed to operate/drive the control unit 120.

The input unit 140a may acquire various types of data from the exterior of the AI device 100. For example, the input unit 140a may acquire learning data for model learning, and input data to which the learning model is to be applied. The input unit 140a may include a camera, a microphone, and/or a user input unit. The output unit 140b may generate output related to a visual, auditory, or tactile sense. The output unit 140b may include a display unit, a speaker, and/or a haptic module. The sensing unit 140 may obtain at least one of internal information of the AI device 100, surrounding environment information of the AI device 100, and user information, using various sensors. The sensor unit 140 may include a proximity sensor, an illumination sensor, an acceleration sensor, a magnetic sensor, a gyro sensor, an inertial sensor, an RGB sensor, an IR sensor, a fingerprint recognition sensor, an ultrasonic sensor, a light sensor, a microphone, and/or a radar.

The learning processor unit 140c may learn a model consisting of artificial neural networks, using learning data. The learning processor unit 140c may perform AI processing together with the learning processor unit of the AI server (400 of FIG. W1). The learning processor unit 140c may process information received from an external device through the communication unit 110 and/or information stored in the memory unit 130. In addition, an output value of the learning processor unit 140c may be transmitted to the external device through the communication unit 110 and may be stored in the memory unit 130.

The embodiments described above are combinations of the components and features of the present disclosure in a specified form. Each component or feature should be considered optional unless explicitly stated otherwise. Each component or feature may be implemented independently of other components or features. Moreover, some components and/or features may be combined to configure an embodiment of the present disclosure. The order of operations described in the embodiments of the present disclosure may be modified. Some components or features of one embodiment may be included in another embodiment or replaced with corresponding components or features of another embodiment. It is evident that claims not explicitly cited in the claims can be combined to configure an embodiment or included as new claims through amendment after filing an application.

Embodiments may be applied to wireless communication devices, such as a UE and a BS, operating in various wireless communication systems, including 3GPP LTE/LTE-A systems/5G systems (or New RAT (NR) systems).

The method, UE, processing device, and storage medium for receiving downlink signals, and the method and BS for transmitting downlink signals according to the embodiments may be referred to as methods/devices according to the embodiments for short.

The methods/devices according to the embodiments may include and perform a method of supporting device types with different UE bandwidth capabilities in a wireless communication system.

Embodiments relate to a wireless communication system and, more particularly, to methods and devices for supporting device types with different bandwidth capabilities.

As used herein, a downlink (DL) refers to a communication from a base station (BS) to a user equipment (UE), and an uplink (UL) refers to a communication from a UE to a BS. On the DL, the transmitter may be part of the BS and the receiver may be part of the UE. On the UL, the transmitter may be part of the UE and the receiver may be part of the BS. In this document, the BS may be represented as a first communication device and the UE as a second communication device. The BS may be replaced by terms such as fixed station, Node B, evolved-NodeB (eNB), next generation NodeB (gNB), base transceiver system (BTS), access point (AP), network or 5G network node, AI system, road side unit (RSU), and robot. Similarly, the UE may be replaced by terms such as terminal, mobile station (MS), user terminal (UT), mobile subscriber station (MSS), subscriber station (SS), advanced mobile station (AMS), wireless terminal (WT), machine-type communication (MTC) device, machine-to-machine (M2M) device, device-to-device (D2D) device, vehicle, robot, and AI module.

Referring to the communication standards associated with the methods/devices according to embodiments, the following technologies may be used in various wireless access systems, such as code division multiple access (CDMA), frequency division multiple access (FDMA), time division multiple access (TDMA), orthogonal frequency division multiple access (OFDMA), and single carrier FDMA (SC-FDMA). CDMA may be implemented with wireless technologies such as Universal Terrestrial Radio Access (UTRA) or CDMA2000. TDMA may be implemented with wireless technologies such as Global System for Mobile communications (GSM)/General Packet Radio Service (GPRS)/Enhanced Data Rates for GSM Evolution (EDGE). OFDMA may be implemented with wireless technologies such as IEEE 802.11 (Wi-Fi), IEEE 802.16 (WiMAX), IEEE 802-20, and E-UTRA (Evolved UTRA). UTRA is part of the Universal Mobile Telecommunications System (UMTS). 3GPP (3rd Generation Partnership Project) LTE (Long Term Evolution) is part of E-UMTS (Evolved UMTS), which uses E-UTRA, and LTE-A (Advanced)/LTE-A pro is an evolved version of 3GPP LTE. 3GPP NR (New Radio or New Radio Access Technology) is an evolved version of 3GPP LTE/LTE-A/LTE-A pro.

For clarity, the description is based on 3GPP communication systems (e.g., LTE-A, NR), but the technical ideas of the present disclosure are not limited thereto. LTE refers to technology introduced after 3GPP TS 36.xxx Release 8. Specifically, LTE technology after 3GPP TS 36.xxx Release 10 is referred to as LTE-A, and LTE technology after 3GPP TS 36.xxx Release 13 is referred to as LTE-A pro. 3GPP NR refers to technology introduced after TS 38.xxx Release 15. LTE/NR may be referred to as 3GPP systems. "xxx" represents the specific standard document number. LTE/NR may be referred to collectively as the 3GPP system.

For background technology, terminology, and abbreviations used in this document, reference may be made to standard documents published prior to the present disclosure. For example, reference may be made to the following documents

For example, the following 3GPP NR documents may be referenced: - 3GPP TS 38.211: Physical channels and modulation, - 3GPP TS 38.212: Multiplexing and channel coding, - 3GPP TS 38.213: Physical layer procedures for control, - 3GPP TS 38.214: Physical layer procedures for data, - 3GPP TS 38.215: Physical layer measurements, - 3GPP TS 38.300: NR and NG-RAN Overall Description, - 3GPP TS 38.304: User Equipment (UE) procedures in idle mode and in RRC inactive state, - 3GPP TS 38.321: Medium Access Control (MAC) protocol, - 3GPP TS 38.322: Radio Link Control (RLC) protocol, - 3GPP TS 38.323: Packet Data Convergence Protocol (PDCP), - 3GPP TS 38.331: Radio Resource Control (RRC) protocol, - 3GPP TS 37.324: Service Data Adaptation Protocol (SDAP), - 3GPP TS 37.340: Multi-connectivity; Overall description, - 3GPP TS 23.287: Application layer support for V2X services; Functional architecture and information flows, - 3GPP TS 23.501: System Architecture for the 5G System, - 3GPP TS 23.502: Procedures for the 5G System, - 3GPP TS 23.503: Policy and Charging Control Framework for the 5G System; Stage 2, - 3GPP TS 24.501: Non-Access-Stratum (NAS) protocol for 5G System (5GS); Stage 3, - 3GPP TS 24.502: Access to the 3GPP 5G Core Network (5GCN) via non-3GPP access networks, - 3GPP TS 24.526: User Equipment (UE) policies for 5G System (5GS); Stage 3.

Regarding New Radio (NR) (or NR radio access) related to the methods/devices according to the embodiments, the growing number of communication devices and their increasing demand for higher communication capacity highlight the need for enhanced mobile broadband communication compared to existing radio access technology (RAT). In addition, massive Machine Type Communications (mMTC), which connects a large number of devices and objects to provide various services anytime and anywhere, is also one of the major issues to be considered in next-generation communications. Furthermore, communication system designs considering services/UEs sensitive to reliability and latency are being discussed. As such, the introduction of next-generation RAT considering eMBB (Enhanced mobile Broadband Communication), mMTC, and URLLC (Ultra-Reliable and Low Latency Communication) is under discussion. For simplicity, the technology is referred to as NR in this specification. NR represents an example of 5G radio access technology (RAT)

A new RAT system, including NR, employs OFDM transmission or a similar transmission methods. This new RAT system may follow different OFDM parameters than the OFDM parameters of LTE. Alternatively, the new RAT system may conform to the numerology of conventional LTE/LTE-A but have a larger system bandwidth (e.g., 100 MHz). Alternatively, a single cell may support multiple numerologies. In other words, UEs operating based on different numerologies may coexist in a single cell.

A numerology corresponds to one subcarrier spacing in the frequency domain. By scaling the reference subcarrier spacing by an integer N, different numerologies may be defined.

Regarding the NR system related to the methods/devices according to the embodiments, the growing number of communication devices and their increasing demand for higher communication capacity highlight the need for enhanced mobile broadband communication compared to existing radio access technology. In addition, massive Machine Type Communications (MTC), which connects a large number of devices and objects to provide various services anytime and anywhere, is also one of the major issues to be considered in next-generation communications. Furthermore, communication system designs considering services/UEs sensitive to reliability and latency are being discussed. As such, the introduction of next-generation radio access technology considering enhanced mobile broadband communication, massive MTC, and URLLC (Ultra-Reliable and Low Latency Communication) is under discussion. For simplicity, this technology is referred to as NR in the present disclosure.

Three key requirement areas of 5G are (1) enhanced mobile broadband (eMBB), (2) massive machine type communication (mMTC), and (3) ultra-reliable and low latency communications (URLLC).

Some use cases may require multiple dimensions for optimization, while others may focus only on one key performance indicator (KPI). 5G supports such diverse use cases in a flexible and reliable way.

eMBB goes far beyond basic mobile Internet access and covers rich interactive work, media and entertainment applications in the cloud or augmented reality (AR). Data is one of the key drivers for 5G and in the 5G era, we may for the first time see no dedicated voice service. In 5G, voice is expected to be handled as an application program, simply using data connectivity provided by a communication system. The main drivers for an increased traffic volume are the increase in the size of content and the number of applications requiring high data rates. Streaming services (audio and video), interactive video, and mobile Internet connectivity will continue to be used more broadly as more devices connect to the Internet. Many of these applications require always-on connectivity to push real time information and notifications to users. Cloud storage and applications are rapidly increasing for mobile communication platforms. This is applicable for both work and entertainment. Cloud storage is one particular use case driving the growth of uplink data rates. 5G will also be used for remote work in the cloud which, when done with tactile interfaces, requires much lower end-to-end latencies in order to maintain a good user experience. Entertainment, for example, cloud gaming and video streaming, is another key driver for the increasing need for mobile broadband capacity. Entertainment will be very essential on smart phones and tablets everywhere, including high mobility environments such as trains, cars and airplanes. Another use case is AR for entertainment and information search, which requires very low latencies and significant instant data volumes.

One of the most expected 5G use cases is the functionality of actively connecting embedded sensors in every field, that is, mMTC. It is expected that there will be 20.4 billion potential Internet of things (IoT) devices by 2020. In industrial IoT, 5G is one of areas that play key roles in enabling smart city, asset tracking, smart utility, agriculture, and security infrastructure.

URLLC includes services which will transform industries with ultra-reliable/available, low latency links such as remote control of critical infrastructure and self-driving vehicles. The level of reliability and latency are vital to smart-grid control, industrial automation, robotics, drone control and coordination, and so on.

Next, several use cases are discussed in more detail below.

5G may complement fiber-to-the home (FTTH) and cable-based broadband (or data-over-cable service interface specifications (DOCSIS)) as a means of providing streams at data rates of hundreds of megabits per second to giga bits per second. Such a high speed is required for TV broadcasts at or above a resolution of 4K (6K, 8K, and higher) as well as virtual reality (VR) and AR. VR and AR applications mostly include immersive sport games. A special network configuration may be required for a specific application program. For VR games, for example, game companies may have to integrate a core server with an edge network server of a network operator in order to minimize latency.

The automotive sector is expected to be a very important new driver for 5G, with many use cases for mobile communications for vehicles. For example, entertainment for passengers requires simultaneous high capacity and high mobility mobile broadband, because future users will expect to continue their good quality connection independent of their location and speed. Other use cases for the automotive sector are AR dashboards. These display overlay information on top of what a driver is seeing through the front window, identifying objects in the dark and telling the driver about the distances and movements of the objects. In the future, wireless modules will enable communication between vehicles themselves, information exchange between vehicles and supporting infrastructure and between vehicles and other connected devices (e.g., those carried by pedestrians). Safety systems may guide drivers on alternative courses of action to allow them to drive more safely and lower the risks of accidents. The next stage will be remote-controlled or self-driving vehicles. These require very reliable, very fast communication between different self-driving vehicles and between vehicles and infrastructure. In the future, self-driving vehicles will execute all driving activities, while drivers are focusing on traffic abnormality elusive to the vehicles themselves. The technical requirements for self-driving vehicles call for ultra-low latencies and ultra-high reliability, increasing traffic safety to levels humans cannot achieve.

Smart cities and smart homes, often referred to as smart society, will be embedded with dense wireless sensor networks. Distributed networks of intelligent sensors will identify conditions for cost- and energy-efficient maintenance of the city or home. A similar setup may be done for each home, where temperature sensors, window and heating controllers, burglar alarms, and home appliances are all connected wirelessly. Many of these sensors are typically characterized by low data rate, low power, and low cost, but for example, real time high definition (HD) video may be required in some types of devices for surveillance.

The consumption and distribution of energy, including heat or gas, is becoming highly decentralized, creating the need for automated control of a very distributed sensor network. A smart grid interconnects such sensors, using digital information and communications technology to gather and act on information. This information may include information about the behaviors of suppliers and consumers, allowing the smart grid to improve the efficiency, reliability, economics and sustainability of the production and distribution of fuels such as electricity in an automated fashion. A smart grid may be seen as another sensor network with low delays.

The health sector has many applications that may benefit from mobile communications. Communications systems enable telemedicine, which provides clinical health care at a distance. It helps eliminate distance barriers and may improve access to medical services that would often not be consistently available in distant rural communities. It is also used to save lives in critical care and emergency situations. Wireless sensor networks based on mobile communication may provide remote monitoring and sensors for parameters such as heart rate and blood pressure.

Wireless and mobile communications are becoming increasingly important for industrial applications. Wires are expensive to install and maintain, and the possibility of replacing cables with reconfigurable wireless links is a tempting opportunity for many industries. However, achieving this requires that the wireless connection works with a similar delay, reliability and capacity as cables and that its management is simplified. Low delays and very low error probabilities are new requirements that need to be addressed with 5G.

Finally, logistics and freight tracking are important use cases for mobile communications that enable the tracking of inventory and packages wherever they are by using location-based information systems. The logistics and freight tracking use cases typically require lower data rates but need wide coverage and reliable location information.

In addition, use cases for areas that span mMTC and eMBB, or mMTC and URLLC, are recognized as important.

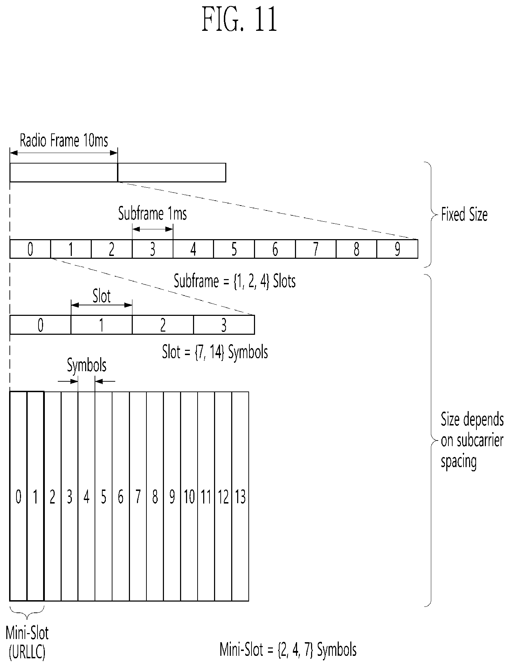

FIG. 11 illustrates an NR frame structure according to embodiments.

FIG. 11 illustrates an example frame structure in NR.

The NR system may support multiple numerologies. A numerology may be defined by a subcarrier spacing (SCS) and a cyclic prefix (CP) overhead. Multiple SCSs may be derived by scaling a default SCS by an integer N (or $\mu$). Further, even though it is assumed that a very small SCS is not used in a very high carrier frequency, a numerology to be used may be selected independently of the frequency band of a cell. Further, the NR system may support various frame structures according to multiple numerologies.

Now, a description will be given of OFDM numerologies and frame structures which may be considered for the NR system. Multiple OFDM numerologies supported by the NR system may be defined as listed in Table 1. For a bandwidth part, $\mu$ and a CP are obtained from RRC parameters provided by the BS.

[Table 1]

| $\mu$ | $\Delta f = 2^{\mu}*15$ [kHz] | Cyclic prefix(CP) |
|---|---|---|
| 0 | 15 | Normal |
| 1 | 30 | Normal |
| 2 | 60 | Normal, Extended |
| 3 | 120 | Normal |
| 4 | 240 | Normal |

In NR, multiple numerologies (e.g., SCSs) are supported to support a variety of 5G services. For example, a wide area in cellular bands is supported for an SCS of 15kHz, a dense-urban area, a lower latency, and a wider carrier bandwidth are supported for an SCS of 30kHz/60kHz, and a larger bandwidth than 24.25GHz is supported for an SCS of 60kHz or more, to overcome phase noise.

An NR frequency band is defined by two types of frequency ranges, FR1 and FR2. FR1 may be a sub-6GHz range, and FR2 may be an above-6GHz range, that is, a millimeter wave (mmWave) band.

Table 2 below defines the NR frequency band, by way of example.

[Table 2]

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

Regarding a frame structure in the NR system, the time-domain sizes of various fields are represented as multiples of a basic time unit for NR, $T_c = 1/(\Delta f_{max}*N_f)$ where $\Delta f_{max} = 480*10^3$ Hz and a value $N_f$ related to a fast Fourier transform (FFT) size or an inverse fast Fourier transform (IFFT) size is given as $N_f = 4096$. $T_c$ and $T_s$ which is an LTE-based time unit and sampling time, given as $T_s = 1/((15\text{kHz})*2048)$ are placed in the following relationship: $T_s/T_c = 64$. DL and UL transmissions are organized into (radio) frames each having a duration of $T_f = (\Delta f_{max}*N_f/100)*T_c = 10$ms. Each radio frame includes 10 subframes each having a duration of $T_{sf} = (\Delta f_{max}*N_f/1000)*T_c = 1$ms. There may exist one set of frames for UL and one set of frames for DL. For a numerology $\mu$, slots are numbered with $n^{\mu}_s \in \{0,...,N^{slot,\mu}_{subframe}-1\}$ in an increasing order in a subframe, and with $n^{\mu}_{s,f} \in \{0, . . . ,N^{slot,\mu}_{frame}-1\}$ in an increasing order in a radio frame. One slot includes $N^{\mu}_{symb}$

consecutive OFDM symbols, and $N^\mu_{symb}$ depends on a CP. The start of a slot $n^\mu_s$ in a subframe is aligned in time with the start of an OFDM symbol $n^\mu_s * N^\mu_{symb}$ in the same subframe. Table 3 shows the number of OFDM symbols per slot ($N^{slot}_{symb}$), the number of slots per frame ($N^{frame,\mu}_{slot}$), and the number of slots per subframe ($N^{subframe,\mu}_{slot}$) in the normal CP, and Table 4 shows the number of OFDM symbols per slot, the number of slots per frame, and the number of slots per subframe in the extended CP.

[Table 3]

| $\mu$ | $N^{slot}_{symb}$ | $N^{frame,\mu}_{slot}$ | $N^{subframe,\mu}_{slot}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N^{slot}_{symb}$ | $N^{frame,\mu}_{slot}$ | $N^{subframe,\mu}_{slot}$ |
|---|---|---|---|
| 2 | 12 | 40 | 4 |

FIG. 11 illustrates an example with $\mu$=2 (i.e., an SCS of 60 kHz). Referring to Table 3, one subframe may include four slots. One subframe = {1, 2, 4} slots in FIG. 11, which is exemplary, and the number of slot(s) which may be included in one subframe is defined as shown in Table 3 or 4.

Further, a mini-slot may include 2, 4 or 7 symbols, fewer symbols than 2, or more symbols than 7.

For physical resources related to the methods/devices according to the embodiments, regarding physical resources in the NR system, antenna ports, resource grids, resource elements, resource blocks, and carrier parts may be considered. In the following, the physical resources that may be considered in the NR system will be discussed in detail.

First, regarding antenna ports, an antenna port is defined such that that a channel on which a symbol on an antenna port is conveyed may be inferred from a channel on which another symbol on the same antenna port is conveyed. If the large-scale properties of a channel on which a symbol on one antenna port is conveyed can be inferred from a channel on which the symbol on another antenna port is conveyed, the two antenna ports may be considered to have a quasi co-located (or quasi co-location) (QC/QCL) relationship. Here, the large-scale properties include one or more of the following parameters: delay spread, Doppler spread, frequency shift, average received power, received timing, average delay, and spatial reception (Rx). The spatial Rx parameter refers to spatial (reception) channel characteristics, such as the angle of arrival.

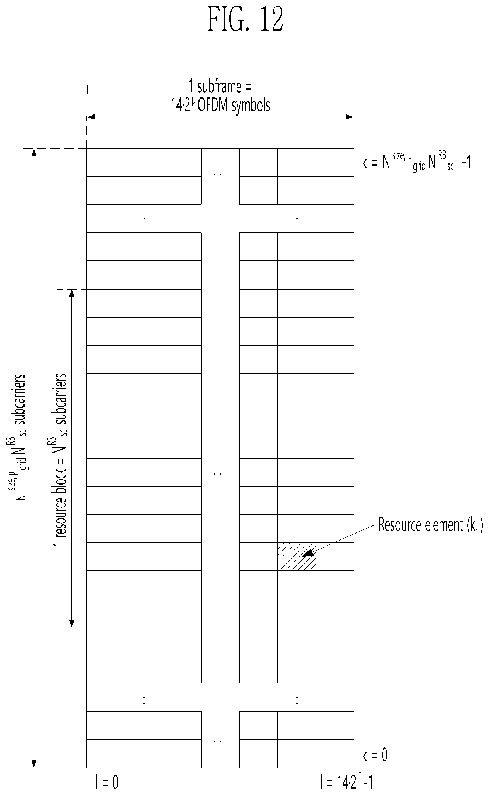

FIG. 12 illustrates an NR resource grid according to embodiments.

FIG. 12 illustrates an example resource grid in NR.

Referring to FIG. 12, for each subcarrier spacing configuration and carrier, a resource grid including $N^{size,\mu}_{grid} * N^{RB}_{sc}$ subcarriers and $14 \cdot 2^\mu$ OFDM symbols is defined, where $N^{size,\mu}_{grid}$ is dictated by RRC signaling from the BS. $N^{size,\mu}_{grid}$ may vary between uplink and downlink as well as with the subcarrier spacing configuration $\mu$. There is one resource grid for subcarrier spacing configuration $\mu$, antenna port p, and transmission direction (uplink or downlink). Each element of the resource grid for subcarrier spacing configuration $\mu$ and antenna port p is referred to as a resource element and is uniquely identified by an index pair (k,l), where k refers to an index in the frequency domain and l refers to the symbol position in the frequency domain with respect to a reference point. The resource element (k,l) for subcarrier spacing configuration $\mu$ and antenna port p corresponds to a physical resource and a complex value $a^{(p,\mu)}_{k,l}$. A resource block (RB) is defined as 12 consecutive subcarriers in the frequency domain, $N^{RB}_{sc}=12$.

Considering that the UE may not support the wide bandwidth, which will be supported by the NR system, all at once, the UE may be configured to operate in part of the frequency bandwidth of the cell (hereinafter referred to as bandwidth part (BWP)).

The RBs in the NR system include physical resource blocks defined within the bandwidth part and common resource blocks numbered from 0 upward in the frequency domain for subcarrier spacing configuration $\mu$.

Point A is acquired as follows:

- *offsetToPointA* for PCell downlink indicates the frequency offset between the lowest subcarrier of the lowest RB overlapping with the SS/PBCH block used by the UE for initial cell selection and point A, expressed in RB units assuming a 15 kHz subcarrier spacing for FR1 and a 60 kHz subcarrier spacing for FR2;

- In other cases, *absoluteFrequencyPointA* denotes the frequency-position of point A as expressed in absolute radio-frequency channel number (ARFCN).

The center of subcarrier 0 of common RB 0 for subcarrier spacing configuration $\mu$ coincides with point A, which serves as a reference point for the resource grid. In the frequency domain, the relationship between the common RB number $n^{\mu}_{CRB}$ and the resource element (k,l) for subcarrier spacing configuration $\mu$ is given by the following equation.

[Equation 1]

$$n^{\mu}_{\mathrm{CRB}} = \left\lfloor \frac{k}{N^{\mathrm{RB}}_{\mathrm{sc}}} \right\rfloor,$$

where k is defined relative to point A such that k=0 corresponds to a subcarrier centered at point A. The physical RBs are numbered from 0 to $N^{size}_{BWP,i}$-1 within a bandwidth part (BWP), where i is the number of the BWP. The relationship between the physical $n_{PRB}$ $n_{PRB}$ and the common RB $n_{CRB}$ in BWP i is given by Equation 2 below.

[Equation 2]

$$n_{\mathrm{CRB}} = n_{\mathrm{PRB}} + N^{\mathrm{start}}_{\mathrm{BWP},i}$$

where $N^{start}_{BWP,i}$ is the common RB at which the BWP starts relative to common RB 0.

Regarding the bandwidth parts (BWP) related to the methods/devices according to the embodiments, up to 400 MHz may be supported per carrier in an NR system. If a UE operating on such a wideband carrier always keeps its radio frequency (RF) module active for the entire carrier, it can lead to excessive battery consumption of the UE. Alternatively, considering various use cases (e.g., eMBB, URLLC, mMTC, V2X, etc.) within a single wideband carrier, different numerologies (e.g., subcarrier spacings) may be supported for different frequency bands within the carrier, or different UEs may have different capabilities for maximum bandwidth. Taking these cases into account, the BS may instruct the UE to operate only within a portion of the full bandwidth of the wideband carrier, and this portion is referred to as a bandwidth part (BWP). In the frequency domain, a BWP is a subset of contiguous common RBs defined for a numerology $\mu$ within BWP i on the carrier, where a single numerology (e.g., subcarrier spacing, CP length, slot/mini-slot duration) may be configured.

The BS may configure one or more BWPs within a single carrier configured for the UE. Alternatively, in the case where multiple UEs are concentrated on a specific BWP, the BS may move some UEs to other BWPs for load balancing. Alternatively, considering frequency domain inter-cell interference cancellation among neighboring cells, the BS may exclude a portion of the spectrum in the middle of the entire bandwidth and configure BWPs on both sides of the cell in the same slot. In other words, the BS may configure at least one DL/UL BWP for UEs associated with the wideband carrier. The BS may activate at least one of the configured DL/UL BWP(s) at a specific time (by means of L1 signaling, which is physical layer signaling, MAC control element (CE), which is RRC signaling, or the like) and instruct the UE to switch to another configured DL/UL BWP (by L1 signaling, MAC CE, or RRC signaling) or set a timer value such that the UE switches to a predetermined DL/UL BWP when the timer expires. The activated DL/UL BWP is specifically referred to as an active DL/UL BWP. In some situations, such as when the UE is in the process of initial access or before the RRC connection of the UE is set up, the UE may not receive configuration for DL/UL BWP. The DL/UL BWP assumed by the UE in these situations is referred to as an initial active DL/UL BWP.

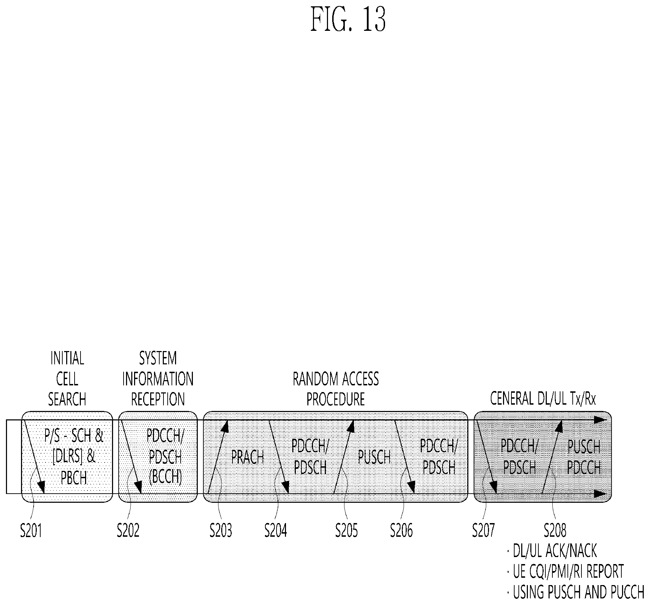

FIG. 13 illustrates a 3GPP signal transmission and/or reception method according to embodiments

FIG. 13 illustrates a physical channel of the 3GPP system of a method/device according to embodiments and general signal transmission and/or reception methods using the physical channel.

Referring to FIG. 13, when a UE is powered on or newly enters a cell, it performs initial cell search operations, such as synchronizing with the BS (S201). To this end, the UE may receive a primary synchronization channel (P-SCH) and a secondary synchronization channel (S-SCH) from the BS and synchronize with the BS and acquire information such as the cell ID. In LTE and NR systems, the P-SCH and S-SCH are referred to as a primary synchronization signal (PSS) and a secondary synchronization signal (SSS), respectively. Subsequently, the UE may receive a physical broadcast channel (PBCH) from the BS and acquire intra-cell broadcast information. During the initial cell search operation, the UE may receive a downlink reference signal (DL RS) and check the downlink channel condition.

After completing the initial cell search, the UE may receive a physical downlink control channel (PDCCH) and a physical downlink shared channel (PDSCH) and acquire more specific system information (S202).

When the UE accesses the BS for the first time or lacks radio resources for signal transmission, it may perform a random access procedure (RACH) toward the BS (operations S203 to S206). To this end, the UE may transmit a specific sequence as a preamble over a physical random access channel (PRACH) (S203 and S205) and receive a random access response (RAR) message for the preamble over the PDCCH and corresponding PDSCH (S204 and S206). In the case of a contention-based RACH, a contention resolution procedure may be additionally performed.

After completing the above described procedure, the UE may then perform a general uplink/downlink signal transmission procedure including PDCCH/PDSCH reception (S207) and physical uplink shared channel (PUSCH)/physical uplink control channel (PUCCH) transmission (S208). S In particular, the UE receives downlink control information (DCI) on the PDCCH.

The UE monitors a set of PDCCH candidates in monitoring occasions configured in one or more control element sets (CORESETs) on the serving cell. The set of PDCCH candidates to be monitored by the UE may be defined in terms of search space sets, which may be common or UE-specific search space sets. A CORESET is composed of a set of (physical) RBs with a time duration of 1 to 3 OFDM symbols. The network may configure the UE to have multiple CORESETs. The UE monitors PDCCH candidates within one or more search space sets, where monitoring means attempting to decode PDCCH candidates in the search space. If the UE successfully decodes one of the PDCCH candidates, it may determine that it has detected a PDCCH from the corresponding PDCCH candidate and performs PDSCH reception or PUSCH transmission based on the DCI in the detected PDCCH.

The PDCCH may be used to schedule DL transmissions on the PDSCH and UL transmissions on the PUSCH. Here, the DCI on the PDCCH includes a downlink assignment (i.e., DL grant) that includes at least modulation and coding format and resource allocation information related to the downlink shared channel, or an uplink grant that includes modulation and coding format and resource allocation information related to the uplink shared channel. The format of the DCI varies depending on its purpose.

Table 5 provides examples of DCI formats in the NR system.

[Table 5]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |

DCI format 0_0 and DCI format 1_0 are also referred to as fallback DCI formats. DCI format 0_0 and DCI format 1_0 do not have a carrier indicator field. Since DCI format 0_0 and DCI format 1_0 do not have a carrier indicator field, a UE detecting DCI format 0_0 and DCI format 1_0 in a cell may determine that a PUSCH or PDSCH is scheduled in the cell. On the other hand, DCI format 0_1 and DCI format 1_1 have a carrier indicator field, and the UE may determine that a PUSCH or PDSCH is scheduled on the carrier indicated by the carrier indicator field.

The control information transmitted by the UE to the BS or received by the UE from the BS on the uplink includes downlink/uplink ACK/NACK signaling and CSI. In 3GPP LTE systems, the UE may transmit the CSI described above on the PUSCH and/or PUCCH.

The methods/devices according to the embodiments include the initial access (IA) and random access (RA) procedures disclosed below.

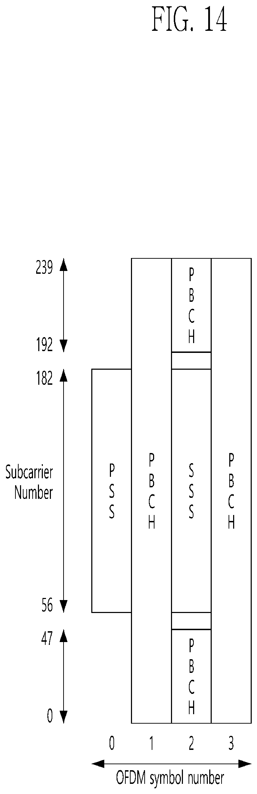

FIG. 14 illustrates the structure of a synchronization signal block (SSB) according to embodiments.

FIG. 14 illustrates an SSB structure. Regarding the synchronization signal block (SSB) transmission related to the methods/devices according to the embodiments and related operations, a UE may perform cell search, system information acquisition, beam alignment for initial access, DL measurement, and the like based on the SSB. The SSB is used interchangeably with the synchronization signal/physical broadcast channel (SS/PBCH) block.

Referring to FIG. 14, the SSB is composed of the PSS, SSS, and PBCH. The SSB is composed of four consecutive OFDM symbols, where the PSS, PBCH, SSS/PBCH, or PBCH is transmitted per OFDM symbol. The PSS and SSS each consist of one OFDM symbol and 127 subcarriers, while the PBCH consists of three OFDM symbols and 576 subcarriers. The PBCH is encoded/decoded based on a polar code and modulated/demodulated according to quadrature phase shift keying (QPSK). The PBCH in an OFDM symbol is composed of data resource elements (REs) to which the complex modulation value of the PBCH is mapped, and DMRS REs to which the demodulation reference signal (DMRS) for the PBCH is mapped. There are three DMRS REs per RB of OFDM symbols, and three data REs between the DMRS REs.

Regarding the cell search of the methods/devices according to the embodiments, the cell search refers to the process through which the UE acquires time/frequency synchronization of a cell and detects the cell ID (e.g., Physical layer Cell ID (PCI)) of the cell. The PSS is used to detect the cell ID within a cell ID group, while the SSS is used to detect the cell ID group. The PBCH is used for SSB (time) index detection and half-frame detection.

The cell search procedure of the UE may be summarized as shown in Table 6 below.

[Table 6]

| | Type of Signals | Operations |
|---|---|---|
| 1 st step | PSS | * SS/PBCH block (SSB) symbol timing acquisition<br>* Cell ID detection within a cell ID group (3 hypothesis) |
| 2nd Step | SSS | * Cell ID group detection (336 hypothesis) |
| 3rd Step | PBCH DMRS | * SSB index and Half frame (HF) index (Slot and frame boundary detection) |
| 4th Step | PBCH | * Time information (80 ms, System Frame Number (SFN), SSB index, HF)<br>* Remaining Minimum System Information (RMSI) Control resource set (CORESET)/Search space configuration |
| 5th Step | PDCCH and PDSCH | * Cell access information<br>* RACH configuration |

There are 336 cell ID groups. Each group has three cell IDs. There are 1008 cell IDs in total. Information about the cell ID group to which the cell ID of a cell belongs is provided/acquired through the SSS of the cell, while information about the cell IDs of the 336 cells within the cell ID is provided/acquired through the PSS.

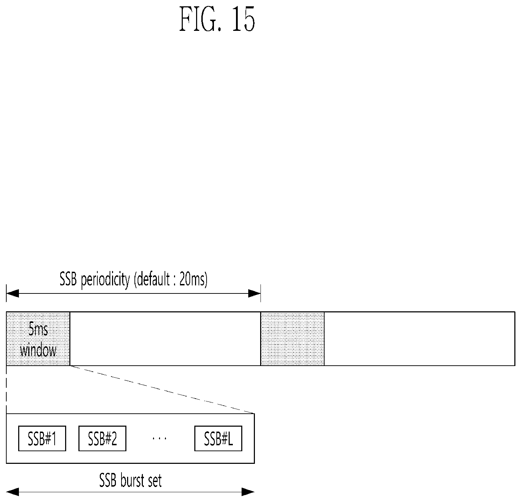

FIG. 15 illustrates an example of SSB transmission according to embodiments.

SSBs are periodically transmitted with an SSB periodicity. A default SSB periodicity assumed by the UE in initial cell search is defined as 20 ms. After cell access, the SSB periodicity may be set to one of {5 ms, 10 ms, 20 ms, 40 ms, 80 ms, and 160 ms} by the network (e.g., BS). An SSB burst set may be configured at the beginning of the SSB periodicity. The SSB burst set may be set to a time window of 5 ms (i.e., half-frame), and the SSB may be repeatedly transmitted up to L times within the SS burst set. The maximum number of SSB transmissions L may be given depending carrier frequency bands as follows. One slot includes up to two SSBs.

- For frequency range up to 3 GHz, L = 4
- For frequency range from 3GHz to 6 GHz, L = 8
- For frequency range from 6 GHz to 52.6 GHz, L = 64

The time-domain positions of candidate SSBs in the SS burst set may be defined depending on subcarrier spacings. The time-domain positions of the candidate SSBs are indexed from (SSB indices) 0 to L-1 in temporal order within the SSB burst set (i.e., half-frame).

Multiple SSBs may be transmitted within the frequency span of a carrier. Each SSB may not need to have a unique physical layer cell identifier, but different SSBs may have different physical layer cell identifiers.

The UE may acquire DL synchronization by detecting the SSB. The UE may identify the structure of the SSB burst set based on the detected SSB (time) index, and thus the UE may detect a symbol/slot/half-frame boundary. A frame/half-frame number to which the detected SSB belongs may be identified based on system frame number (SFN) information and half-frame indication information.

Specifically, the UE may acquire, from the PBCH, a 10-bit SFN for the frame to which the PBCH belongs. Next, the UE may acquire 1-bit half-frame indication information. For example, when the UE detects a PBCH with the half-frame indication bit set to 0, it may determine that the SSB to which the PBCH belongs belongs to the first half-frame in the frame. When the UE detects a PBCH with the half-frame indication bit set to 1, it may determine that the SSB to which the PBCH belongs belongs to the second half-frame in the frame. Finally, the UE may acquire the SSB index of the SSB to which the PBCH belongs based on the DMRS sequence and the PBCH payload carried by the PBCH.

Regarding the acquisition of system information related to the methods/devices in the embodiments, the SI is divided into a master information block (MIB) and multiple system information blocks (SIBs). System information (SI) other than the MIB may be referred to as remaining minimum system information (RMSI). For further details, reference may be made to the description below.

- The MIB includes information/parameters for monitoring a PDCCH scheduling a PDSCH carrying SIB1 (System-InformationBlock1), and the MIB is transmitted by the BS over the PBCH of an SSB. For example, the UE may check based on the MIB whether there is a CORESET for a Type0-PDCCH common search space. The Type0-PDCCH common search space is a kind of PDCCH search space, which is used to transmit a PDCCH scheduling an SI message. If the Type0-PDCCH common search space exists, the UE may determine (1) a plurality of contiguous RBs and one or more consecutive symbols included in the CORESET and (ii) a PDCCH occasion (e.g., a time-domain location for PDCCH reception, based on information (e.g., pdcch-ConfigSIB1) in the MIB. If the Type0-PDCCH common search space does not exist, pdcch-ConfigSIB 1 provides information on a frequency location at which the SSB/SIB1 exists and information on a frequency range where there are no SSB/SIB1.

- SIB1 contains information related to the availability and scheduling (e.g., transmission period, SI-window size) of the remaining SIBs (hereinafter, SIBx, where x is an integer greater than or equal to 2). For example, SIB1 may indicate whether SIBx is broadcast periodically or provided in an on-demand manner at the request from the UE. When SIBx is provided in the on-demand manner, SIB1 may include information necessary for the UE to perform an SI request. SIB1 is transmitted on the PDSCH, and the PDCCH scheduling SIB1 is transmitted through the Type0-PDCCH common search space. SIB1 is transmitted on the PDSCH indicated by the PDCCH.

- SIBx is included in the SI message and transmitted on the PDSCH. Each SI message is transmitted within a periodically occurring time window (i.e., SI-window).

Regarding channel measurement and rate-matching related to the methods/devices according to the embodiments, up to L SSBs may be transmitted within an SSB burst set, and the number/positions of SSBs actually transmitted may vary depending on the BS/cell. The number/positions of the actually transmitted SSBs are used for rate-matching and measurements, and information about the transmitted SSBs is provided to the UE.

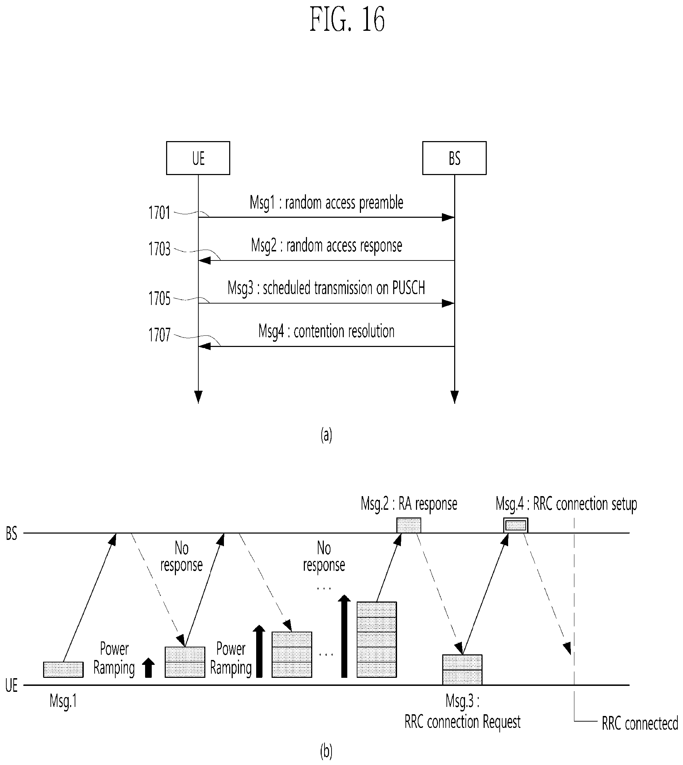

Regarding the random access procedure related to the methods/devices according to the embodiments, the random access procedure of the UE may be summarized as shown in Table 7 and FIG. 16.

[Table 7]

| | | Type of Signals | Operations/Information obtained |
|---|---|---|---|
| | 1st step | PRACH preamble in UL | * Initial beam obtainment<br>* Random selection of RA-preamble ID |
| | 2nd step | Random Access Response on DL-SCH | * Timing Advanced information<br>* RA-preamble ID<br>* Initial UL grant, Temporary C-RNTI |
| | 3rd step | UL transmission on UL-SCH | * RRC connection request<br>* UE identifier |
| | 4th step | Contention Resolution on DL | * Temporary C-RNTI on PDCCH for initial access<br>* C-RNTI on PDCCH for UE in RRC_CONNECTED |

The random access procedure is used for various purposes. For example, the random access procedure may be used for initial network access, handover, and UE-triggered UL data transmission. Through the random access procedure, a UE may acquire UL synchronization and UL transmission resources. The random access procedure is classified into a contention-based random access and a contention-free random procedure.

FIG. 16 illustrates an example of a random access procedure according to embodiments.

FIG. 16 illustrates a contention-based random access procedure.

Initially, the UE may transmit a random access preamble as Msg1 of the random access procedure on the PRACH in the UL (see, for example, 1701 in FIG. 16-(a)).

Two different random access preamble sequence lengths are supported. A long sequence length of 839 is applied for subcarrier spacings of 1.25 and 5 kHz, while a short sequence length of 139 is applied for subcarrier spacings of 15, 30, 60, and 120 kHz.

Multiple preamble formats are defined by one or more RACH OFDM symbols and different cyclic prefixes (CPs) (and/or guard times). The RACH configuration for a cell is included in the system information about the cell and provided to the UE. The RACH configuration includes information about the subcarrier spacing of the PRACH, the available preambles, the preamble formats, and the like. The RACH configuration includes information about the association between SSBs and RACH (time-frequency) resources. The UE shall transmit a random access preamble on the RACH time-frequency resource associated with the detected or selected SSB.

A threshold of SSBs for association with RACH resource may be set by the network, and transmission or retransmission of the RACH preamble may be performed based on SSBs whose reference signal received power (RSRP) measured based on the SSBs meets the threshold. For example, the UE may select one of the SSB(s) meeting the threshold and transmit or retransmit the RACH preamble based on the RACH resources associated with the selected SSB.

Upon receiving the random access preamble from the UE, the BS transmits a random access response (RAR) message (Msg2) to the UE (see, for example, 1703 in FIG. F3-(a)). The PDCCH scheduling the PDSCH carrying the RAR is CRC-masked with a random access (RA) radio network temporary identifier (RNTI) (RA-RNTI) and transmitted. The UE that detects the PDCCH masked with the RA-RNTI may receive a RAR from the PDSCH scheduled by the DCI carried by the PDCCH. The UE checks whether the preamble it transmitted, i.e., the RAR information for Msg1, is in the RAR. Presence or absence of the random access information for Msg1 transmitted by the UE is present may be determined by the presence or absence of the random access preamble ID for the preamble transmitted by the UE. Where there is no response to Msg1, the UE may retransmit the RACH preamble a predetermined number of times or fewer times while performing power ramping. The UE may calculate the PRACH transmit power for the retransmission of the preamble based on the most recent path loss and power ramping counter.

The RAR information includes timing advance information for UL synchronization, an UL grant, and a UE temporary. When the UE receives the RAR information related thereto on the PDSCH, the UE may recognize the timing advance information for UL synchronization, the initial UL grant, and the UE temporary cell RNTI (C-RNTI). The timing advance information is used to control the uplink signal transmission timing. To better align PUSCH/PUCCH transmission by the UE with subframe timing at the network side, the network (e.g., the BS) may measure the time difference between PUSCH/PUCCH/SRS reception and the subframe and send timing advance information based on this measurement. Based on the RAR information, the UE may transmit a UL transmission on the uplink shared channel as Msg3 in the random access procedure (see, for example, 1705 in FIG. 16-(a)). Msg3 may include an RRC connection request and a UE identifier. In response to Msg3, the network may transmit Msg4, which may be treated as a contention resolution message on the DL (see, for example, 1707 in FIG. 16-(a)). Upon receiving Msg4, the UE may enter the RRC connected state.

The contention-free random access procedure is used when the UE performs a handover to another cell or BS or when requested by a command from the BS. The basic operations of the contention-free random access are similar to those of the contention-based random access procedure. However, the contention-free random access procedure differs from the contention-based random access procedure, where the UE arbitrarily selects a preamble to use from among multiple random access preambles, in that the preamble to be used by the UE (hereinafter referred to as the dedicated random access preamble) is assigned by the BS to the UE. Information about the dedicated random access preamble may be included in an RRC message (e.g., a handover command) or provided to the UE through a PDCCH order. Once the random access procedure is initiated, the UE transmits the dedicated random access preamble to the BS. The random access procedure is complete when the UE receives the random access procedure from the BS.

As mentioned earlier, the UL grant in the RAR schedules the PUSCH transmission for the UE. The PUSCH carrying the initial UL transmission by the UL grant in the RAR is sometimes referred to as Msg3 PUSCH. The content of the RAR UL grant starts at the MSB and ends at the LSB and is given in Table 8.

[Table 8].

| RAR UL grant field | Number of bits |
|---|---|
| Frequency hopping flag | 1 |
| Msg3 PUSCH frequency resource allocation | 12 |
| Msg3 PUSCH time resource allocation | 4 |
| Modulation and coding scheme (MCS) | 4 |
| Transmit power control (TPC) for Msg3 PUSCH | 3 |
| CSI request | 1 |

The TPC command is used to determine the transmit power of the Msg3 PUSCH and is interpreted according to Table 9, for example.

[Table 9].

| TPC command | value [dB] |
|---|---|
| 0 | -6 |
| 1 | -4 |
| 2 | -2 |
| 3 | 0 |

(continued)

| TPC command | value [dB] |
|---|---|
| 4 | 2 |
| 5 | 4 |
| 6 | 6 |
| 7 | 8 |

In the contention-free random access procedure, the CSI request field in the RAR UL grant indicates whether the UE should include an aperiodic CSI report in the corresponding PUSCH transmission. The subcarrier spacing for the Msg3 PUSCH transmission is provided by an RRC parameter. The UE will transmit both the PRACH and Msg3 PUSCH on the same uplink carrier of the same serving cell. The UL BWP for the Msg3 PUSCH transmission is indicated by System-InformationBlock1 (SIB1).

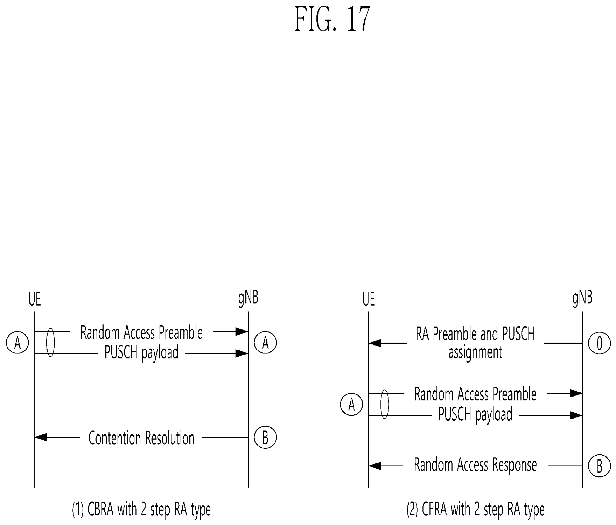

FIG. 17 illustrates a 2-step RACH procedure according to embodiments.

FIG. 17 illustrates a 2-step RACH procedure. Specifically, in FIG. 2, (1) illustrates contention-based random access (CBRA) and (2) illustrates contention-free random access (CFRA).

In FIG. 17, message A (MsgA) includes a preamble and payload (PUSCH payload). The preamble and payload are multiplexed in a TDM manner. Message B (MsgB) may be transmitted in response to MsgA for contention resolution, fallback indication(s), and/or backoff indication.

The following definitions of terms are used in the present disclosure: UE: User Equipment, SSB: Synchronization Signal Block, MIB: Master Information Block, RMSI: Remaining Minimum System Information, FR1: Frequency Range 1, which refers to the frequency range below 6 GHz (e.g., 450 MHz to 6000 MHz). FR2: Frequency Range 2, which refers to the millimeter wave (mmWave) range above 24 GHz (e.g., 24250 MHz to 52600 MHz). BW: Bandwidth, BWP: Bandwidth Part, RNTI: Radio Network Temporary Identifier, CRC: Cyclic Redundancy Check, SIB: System Information Block, SIB1: SIB1 for NR devices = RMSI (Remaining Minimum System Information). Broadcasts information required for cell access of NR devices. CORESET (COntrol REsource SET): Time/frequency resource on which an NR device attempts candidate PDCCH decoding. CORESET0: CORESET for Type0-PDCCH CSS set for NR devices (configured in MIB). Type0-PDCCH CSS set: a search space set in which an NR UE monitors a set of PDCCH candidates for a DCI format with CRC scrambled by a SI-RNTI, MO: PDCCH Monitoring Occasion for Type0-PDCCH CSS set, SIB1-R: (additional) SIB1 for reduced capability NR devices. This may be limited to cases where a separate TB from SIB1 is created and transmitted on a separate PDSCH. CORESET0-R: CORESET0 for reduced capability NR devices. Type0-PDCCH-R CSS set: a search space set in which an redcap UE monitors a set of PDCCH candidates for a DCI format with CRC scrambled by a SI-RNTI. MO-R: PDCCH Monitoring Occasion for Type0-PDCCH CSS set. Cell defining SSB (CD-SSB): SSB that contains RMSI scheduling information among NR SSBs. Non-cell defining SSB (non-CD-SSB): An SSB that is placed in the NR sync raster, but does not contain the RMSI scheduling information of the corresponding cell for measurement purposes. However, it may contain information indicating the position of the cell defining SSB. SCS: subcarrier spacing. SI-RNTI: System Information Radio-Network Temporary Identifier, Camp on: "Camp on" is the UE state in which the UE stays on a cell and is ready to initiate a potential dedicated service or to receive an ongoing broadcast service. TB: Transport Block, RSA (Redcap standalone): A cell that supports only redcap devices or services. SIB1(-R)-PDSCH: PDSCH that transmits SIB1(-R). SIB1(-R)-DCI: DCI that schedules SIB1(-R)-PDSCH. DCI format 1_0 with CRC scrambled by SI-RNTI, SIB1(-R)-PDCCH: PDCCH that transmits SIB1(-R)-DCI. FDRA: Frequency Domain Resource Allocation, TDRA: Time Domain Resource Allocation, RA: Random Access, MSGA: preamble and payload transmissions of the random access procedure for 2-step RA type. MSGB: response to MSGA in the 2-step random access procedure. MSGB may consist of response(s) for contention resolution, fallback indication(s), and backoff indication. RO-N: RO (RACH Occasion) for normal UE 4-step RACH and 2-step RACH (if configured), RO-N1, RO-N2: if separate RO is configured for normal UE 2-step RACH, it is divided into RO-N1 (4-step) and RO-N2 (2-step), RO-R: RO (RACH Occasion) configured separately from RO-N for redcap UE 4-step RACH and 2-step RACH (if configured), RO-R1, RO-R2: if separate RO is configured for redcap UE 2-step RACH, it is divided into RO-R1 (4-step) and RO-R2 (2-step), PG-R: MsgA-Preambles Group for redcap UEs, RAR: Randoma Access Response, RAR window: the time window to monitor RA response(s), FH: Frequency Hopping, iBWP: initial BWP, iBWP-DL(-UL): initial DL(UL) BWP, iBWP-DL(-UL)-R: (separate) initial DL(UL) BWP for RedCap, CS: Cyclic shift, NB: Narrowband, TO: Traffic Offloading, mMTC; massive Machine Type Communications, eMBB: enhanced Mobile Broadband Communication, URLLC: Ultra-Reliable and Low Latency Communication, RedCap: Reduced Capability, FDD: Frequency Division Duplex, HD-FDD: Half-Duplex-FDD, DRX: Discontinuous Reception, RRC: Radio Resource Control, RRM: Radio Resource Management, IWSN: Industrial Wireless Sensor Network, LPWA: Low Power Wide Area, RB: Resource Block, CCE: Control Channel Element, AL: Aggregation Level, PRG: Physical Resource-block Group, DFT-s-OFDM: DFT-spread OFDM.

In this specification, '()' may be construed as both excluding and including the content enclosed in (). As used herein, "/" may mean including all the contents separated by / ("and"), or including only some of the separated contents ("or").

In addition to the main use cases of 5G (mMTC, eMBB, and URLLC), there has been a recent increase in importance/interest in use case areas spanning mMTC and eMBB, or mMTC and URLLC. These use cases may include connected industries, smart cities, and wearables. To more efficiently support the use cases in wireless communication systems from the perspectives of device cost/complexity, power consumption, and the like, new types of terminal devices distinct from conventional NR devices have been introduced. These new types of devices are referred to as Reduced Capability NR devices (hereinafter referred to as RedCap UEs/devices or RedCap). To differentiate them, conventional NR devices will be referred to as non-RedCap UEs/devices or non-RedCap. RedCap devices are cheaper and consume less power than non-RedCap devices. More specifically, they may have all or some of the following features.

RedCap UEs according to embodiments have the following features: Complexity reduction features include reduced maximum UE bandwidth, reduced number of UE RX/TX branches/antennas, Half-Duplex FDD, relaxed UE processing time, and relaxed UE processing capability. Power saving related features include extended DRX for RRC Inactive and/or Idle, and RRM relaxation for stationary devices.

Target use cases for RedCap devices with these features according to embodiments, may include the following.

Regarding connected industries, sensors and actuators connected to the 5G network and core. Large-scale industrial wireless sensor network (IWSN) use cases and requirements are included. Relatively low-cost services requiring small device form factors with battery life lasting for years, as well as URLLC services with very high requirements. The requirements for these services are higher than Low Power Wide Area (LPWA, i.e. LTE-M/NB-IOT) but lower than URLCC and eMBB. Devices in such environments include pressure sensors, humidity sensors, thermometers, motion sensors, accelerometers, and actuators.

Regarding smart cities, the smart city vertical involves the collection and processing of data to monitor and control city resources more efficiently and provide services to city residents. The deployment of surveillance cameras is an essential part not only of smart cities but also of factories and industrial sites.

Regarding wearables, wearable use cases include smartwatches, rings, eHealth devices, and medical monitoring devices. One feature of the use cases is the small size of the devices.

NR may support device types with different maximum UE bandwidths (background #1). In LTE, all LTE UEs support the maximum carrier BW of 20 MHz. In oother words, in terms of maximum UE BW, there is only one device type supporting 20 MHz. On the other hand, NR supports device types with different maximum UE BWs. For example, in FR1, device types supporting maximum UE BWs of 100 MHz, 20 MHz, 5 MHz, etc. may be present or introduced. In FR2, device types supporting maximum UE BWs of 200 MHz, 100 MHz, etc. may be present or introduced

In TR 38.101-1 and TR 38.101-2, the maximum transmission BW for each channel BW in FR1 and FR2 is defined per SCS (Background #2). In NR, for each configurable UE channel BW, the maximum BW that may be used for transmission is defined on a per RB basis, and is referred to as the maximum transmission BW ($N_{RB}$). The maximum transmission BW is defined per SCS. The ratio of the maximum transmission BW to the UE channel BW ultimately indicates the maximum spectrum utilization ratio. In LTE, the ratio was about 90%. However, in NR, the maximum transmission BW is configured to have the largest possible spectrum utilization ratio in order to increase spectrum efficiency. Table 10 shows values of the maximum transmission BW ($N_{RB}$) for each UE channel BW as defined in NR spec TR 38.101-1. values of the maximum transmission BW ($N_{RB}$) for each UE channel BW as defined in TR 38.101-1

[Table 10]

| SCS (kHz) | 5 MHz | 10 MHz | 15 MHz | 20 MHz | 25 MHz | 30 MHz | 40 MHz | 50 MHz | 60 MHz | 70 MHz | 80 MHz | 90 MHz | 100 MHz |
|---|---|---|---|---|---|---|---|---|---|---|---|---|---|
| | $N_{RB}$ | $N_{RB}$ | $N_{RB}$ | $N_{RB}$ | $N_{RB}$ | $N_{RB}$ | $N_{RB}$ | $N_{RB}$ | $N_{RB}$ | $N_{RB}$ | $N_{RB}$ | $N_{RB}$ | $N_{RB}$ |
| 15 | 25 | 52 | 79 | 106 | 133 | 160 | 216 | N/A | N/A | N/A | N/A | N/A | N/A |
| 30 | 11 | 24 | 38 | 51 | 65 | 78 | 106 | 133 | 162 | 189 | 217 | 245 | 273 |
| 60 | N/A | 11 | 18 | 24 | 31 | 38 | 51 | 65 | 79 | 93 | 107 | 121 | 135 |

In combinations of specific UE channel BW and SCS (e.g., combinations of small UE channel BW and large SCS), the spectrum utilization ratio is significantly low (Background #3). As shown in Table 10, the spectrum utilization ratio generally decreases as the UE channel BW decreases and as the SCS increases. For example, among the combinations of UE channel BW (in MHz) and SCS (in kHz), {5 MHz, 30 kHz} has $11\times12\times30/5000\times100=79.2\%$11, {10 MHz, 30 kHz} has 24*12*30/10000*100=86.4%, and {10 MHz, 60 kHz} has a very low ratio of 79.2%. Furthermore, as shown in Table 10, for all combinations of UE channel BW (in MHz) and SCS (in kHz), the minimum value of $N_{RB}$ is 11, and values lower than this value are not supported in NR because the spectral efficiency is excessively low.

It may be necessary to support new values of $N_{RB}$ (Background #4). The least value of the maximum transmission BW ($N_{RB}$) as defined for each UE channel BW is 11, which raises several issues for device types that support the maximum UE BW of 5 MHz or 10 MHz. The control channel element (CCE) aggregation level (AL) is supported only up to level 2. Some PRACH formats are not supported. In the case of DFT-s-OFDM, 11 RBs are not supported, and thus only up to 10 RBs may be used. In other words, the uplink spectrum utilization ratio is further lowered. The spectrum utilization ratio is very low. Additionally, when the maximum transmission BW is 11 RBs, the smallest unit of the physical resource-block group (PRG) is 2 RBs, and thus it cannot be set as a multiple of the PRG. To address these issues, it may be considered to replace the value of $N_{RB}$ with 12 or to add 12 as an additional value of $N_{RB}$ for a combination of UE channel BW (in MHz) and SCS (in kHz) for which $N_{RB}$ is defined as 11. However, unconditionally allowing a greater maximum transmission BW for a specific UE channel BW BW may not be a desirable solution depending on the network configuration because it may lead to increased interference between neighboring channels.

Thus, methods/devices according to embodiments propose the following methods: Carriers and carrier BWs (carrier BW) may be interchangeably interpreted/applied in the embodiments. As used herein, the terms channel and channel BW may be interpreted/applied interchangeably.

The methods/devices according to the embodiments may determine the maximum transmission BW for each UE channel BW. The BS may determine the maximum transmission BW for each UE channel BW based on specific conditions, and set and indicate the determined value to the UE. The conditions for determining the maximum transmission BW for each UE channel BW or the conditions for determining whether to set/indicate the value by the BS may be based on, for example, network configuration and include the conditions used in the proposed methods below.

A method/device according to embodiments may determine a maximum transmission BW for each UE channel BW based on whether the entire carrier BW is used as the UE channel BW (Method #1).

The BS may determine the maximum transmission BW value ($N_{RB}$) as A if the entire carrier BW is used as the UE channel BW, and determine $N_{RB}$ as B otherwise. Here, A may be a conventional value, i.e., a value determined by Table 10. B may be a value greater than A. The value of A and the value of B in, for example, the combination of UE channel BW (in MHz) and SCS (in kHz) {5 MHz, 30 kHz}, may be 11 and 12 greater than 11 according to Table 10. For all the values A and B of $N_{RB}$ in the example according to the embodiments, refer to the example above, i.e., the example of Method #1, unless otherwise stated.

Method #1 may include determining $N_{RB}$ as the conventional value A when the BS cannot predict the impact on neighboring carriers/channels, or can predict/determine that there is an impact, and determining $N_{RB}$ as the value B greater than A when the BS can control/avoid the impact, or to increase the spectrum efficiency of the UE channel BW or address the issues listed in Background #4.

In this way, the embodiments may address the inefficiency of supporting device types with different device BW capabilities on the same cell/carrier and defining a single value of the maximum transmission BW ($N_{RB}$) for each channel BW, taking into account the impact of neighboring carriers/channels, etc. When the entire carrier BW is used as the UE channel BW, the maximum transmission BW $N_{RB}$ is used by defining a single value of the maximum transmission BW ($N_{RB}$) for each channel BW. If the entire carrier BW is not used as the UE channel BW, $N_{RB}$ may be generated as a value greater than the defined single value of the maximum transmission BW ($N_{RB}$). Depending on the usage of the carrier BW, an efficient maximum transmission BW may be adaptively defined.

A method/device according to embodiments may determine a maximum transmission BW for each UE channel BW based on a relative position of the UE channel within the carrier BW (Method #2).

If the UE channel is positioned at the edge (on at least one side) of the carrier bandwidth (BW) within the carrier BW, the BS may determine $N_{RB}$, the maximum transmission BW, as A. Otherwise, the BS may determine $N_{RB}$ as B. In Method #2, if the UE channel is positioned at the edge (on at least one side) of the carrier BW, $N_{RB}$ may be determined as the conventional value A because there may be an impact on neighboring carriers/channels. If the position is not at the edge, $N_{RB}$ may be determined as a value B greater than A to increase the spectral efficiency of the UE channel BW or as a solution to the issues listed in Background #4.

In this way, embodiments may address the inefficiency of supporting device types with different device BW capabilities on the same cell/carrier and defining a single value of the maximum transmission BW ($N_{RB}$) for each channel BW, taking into account the impact of neighboring carriers/channels, etc. Based on the relative position of the channel BW within the carrier BW, a maximum transmission BW value may be generated. When the relative position within the carrier BW is referred to as "center" or "edge" (at least one of both edges), the maximum transmission BW may be generated using a predefined method when the UE channel within the carrier BW is positioned at the edge. Conversely, when the UE channel within the carrier BW is not positioned at the edge, namely, the UE channel is positioned at the center, the maximum transmission BW may be generated as a value greater than the predefined value.

The methods/devices according to the embodiments may determine the maximum transmission BW for each UE channel BW based on the relative positions of the UE channels within the carrier BW (Method #3).

The BS may determine the value of $N_{RB}$ based on the relative positions of the UE channels for the same or different types of devices within the carrier BW. For example, if there is a guardband explicitly configured between the UE channels for the same or different types of devices within the carrier BW, or if the channels are spaced apart by a specific frequency gap (e.g., greater than the size of the guardband), $N_{RB}$ may be determined as B. Otherwise, $N_{RB}$ may be determined as A, considering the impact on neighboring carriers/channels.

Method #3 may be applied only to the relationship between UE channels with different numerologies (e.g., SCS/CP). That is, Method #3 may be applied to UE channels with different numerologies (SCS/CP), and $N_{RB}$ may be determined as B for UE channels with the same numerology (SCS/CP), regardless of the guardband or frequency spacing. This scheme may be based on the assumption that interference between UE channels with the same numerology (SCS/CP) is relatively small.

Method #3 includes determining the maximum transmission BW, $N_{RB}$, as A in a case where device types T1 and T2 with different maximum UE BWs (where T1 has a greater maximum UE bandwidth than T2) share a frequency region. For example, the determination is applied when the T2 UE channel is confined or contained within the T1 UE channel BW, or when the T2 UE channel is positioned at the edge of the T1 UE channel BW (at least on one side), and determining $N_{RB}$ as B in the other case, In the case where the T2 UE channel is positioned at the edge of the T1 UE channel BW (at least on one side), it may have an impact on neighboring carriers/channels, and thus $N_{RB}$ is determined as the conventional value A. Otherwise, $N_{RB}$ may be determined to be B greater than A to increase the spectral efficiency of the UE channel BW, or as a solution to the issues listed in Background #4

In this way, embodiments may address the inefficiency of supporting device types with different device BW capabilities on the same cell/carrier and defining a single value of the maximum transmission BW ($N_{RB}$) for each channel BW, taking into account the impact of neighboring carriers/channels, etc. In the case where there are multiple UE channels, the maximum transmission BW may be determined considering the type of the UEs. In other words, if the inter-channel interference is low, e.g., if the UEs are of the same type and there is a guardband between channels for the respective UEs, or if the UEs are separated by a certain distance or more to have a guardband-like effect, the maximum transmission BW may be set to a value greater than a predefined value.

A method of transmitting a downlink signal in accordance with embodiments, and a BS may include a method of setting a maximum transmission BW per UE channel BW, and a method of indicating the same, and a method of receiving a downlink signal in accordance therewith, and operations of a UE and a terminal of a processing device include the following.

The BS may determine the maximum transmission BW, $N_{RB}$, for each UE channel BW according to the methods described in the embodiments, and may configure and indicate the determined $N_{RB}$ to the UE through broadcast signaling or dedicated/UE-specific RRC signaling.

The UE may acquire $N_{RB}$ determined by the BS according to the methods of the embodiments, or the information required for the UE to determine $N_{RB}$ according to the methods of the embodiments, through broadcast signaling or dedicated/UE-specific RRC signaling. Alternatively, the UE may acquire th information through predefined a configuration/indication as predefined in the spec.

The broadcast signaling according to the embodiments includes system information including SIB1, MIB, a PBCH payload generated at the PHY layer other than the MIB, and a signaling method using PBCH scrambling sequence and PBCH DMRS sequence initialization information.

The BS may set/indicate the value of $N_{RB}$, or the information(s) required for the UE to determine the value of $N_{RB}$, in multiple steps and redundantly. In this case, the UE will may operate according to the most recent setting/indication (of the value). For example, the UE may operate on the assumption of the conventional value A of $N_{RB}$, and then operate on the assumption of a new value B of $N_{RB}$ set/indicated by the broadcast signaling or dedicated/UE-specific RRC signaling.

For the values of $N_{RB}$, A and B, according to the embodiments, refer to the example of Method #1, unless otherwise stated.

In the case where the UE receives a setting/indication through broadcast signaling in the presetting/PBCH transmission step, the UE may operate based on the setting/indication (of the value). Thereafter, when it receives the setting/indication redundantly through broadcast signaling or dedicated/UE-specific RRC signaling, the UE may operate based on the most recent setting/indication (of the value).

When a configuration/indication is provided redundantly through preconfiguration/broadcast signaling and dedicated/UE-specific RRC signaling, the UE may operate as configured/indicated through the dedicated/UE-specific RRC signaling. This method may be used to enable the UE to operate based on the conventional value A of $N_{RB}$ prior to delivering UE capability information to the BS in the RRC connected state in general cases, or for a general device type, or for a specific device type, and to enable the UE to operate based on the value of $N_{RB}$, B, greater than A for a specific device type after delivering the UE capability information to the BS in the RRC connected state, in order to increase spectral efficiency or to address the issues listed in Background #4.

The information required for the UE to determine NRB using the methods according to the embodiments may include carrier BW information, such as carrier BW position/size, UE channel information, such as UE channel position/size in frequency and numerology (SCS/CP), UE channel information for different UE(s) (of different device types), and configuration information about a guardband between UE channels. The UE may acquire the UE channel information either through information separately configured/indicated by the BS or by referring to the (initial) DL/UL BWP configuration information or the CORESETO BW configuration information transmitted in the MIB.

When the UE acquires the UE channel information by referring to the CORESETO BW configuration information, e.g., when the CORESETO BW exceeds the maximum transmission BW ($N_{RB}$) for each UE channel BW that is previously defined (in, e.g., Table H-1), the UE may operate based on the CORESETO BW. The operation based on the CORESETO BW includes receiving the CORESETO BW indicated by the MIB (without puncturing), regardless of the setting of $N_{RB}$, or even when the CORESETO BW exceeds the BW defined by $N_{RB}$. Furthermore, the UE may operate based on the minimum number of RBs that include CORESETO BW. It also includes an operation performed on the assumption that $N_{RB}$ is the minimum number of RBs that contain the CORESETO BW. In this case, the reference SCS for $N_{RB}$ may be assumed by the UE as subCarrierSpacingCommon indicated in the MIB (i.e., the SCS assumed by the UE to receiving SIB1/Msg2/Msg4/MsgB/paging/SI messages) or the SCS used for SSB transmission. Alternatively, it may be assumed as the maximum or minimum SCS available for SSB transmission or data reception/transmission supported in the operating FR or frequency band.

In addition to configuring/indicating the value of $N_{RB}$ or the information required for the UE to determine the value of $N_{RB}$ for the UE through broadcast signaling or dedicated/UE-specific RRC signaling, the BS may support providing (additional) configuration/indication to the UE through dynamic signaling (e.g., DCI, MAC CE, and MAC message) in order to dynamically respond to network situations (e.g., interference situations, changes in network configuration).

The BS may use PDSCH/PUSCH scheduling DCI for dynamic signaling of the value of $N_{RB}$ through the DCI, or the information required for the UE to determine the value of $N_{RB}$. In this case, the UE may determine $N_{RB}$ by referring to the $N_{RB}$-related information indicated by the DCI when receiving PDSCH/CSI-RS by receiving the PDSCH/PUSCH scheduling DCI or transmitting PUSCH/PUCH/SRS, and may determine/decide whether to perform puncturing based on the determination. Also, based on the result, PDSCH/CSI-RS reception/decoding may be performed, or the puncturing operation may be performed in transmitting PUSCH/PUCCH/SRS.

For dynamic signaling of the $N_{RB}$-related information through DCI, the BS may configure/indicate $N_{RB}$-related information to multiple UEs simultaneously using group-common DCI. This method may be used when network situations require dynamic changes of the value of $N_{RB}$ for specific devices (device types), e.g., when it is necessary to change the value of $N_{RB}$ between 12 RBs and 11 RBs in a UE channel BW (in MHz) and SCS (in kHz) combination of {5 MHz, 30 kHz}. In this case, the signaling overhead may be reduced.

In general, a UE does not require channel information related to other UEs except the UE channel information related thereto. However, in order to apply the methods according to the embodiments, e.g., to determine $N_{RB}$, the UE may need UE channel information related to other UEs (of other device types) in addition to the UE channel information related thereto.

In methods according to embodiments, the BS may set/indicate $N_{RB}$ separately for DL and UL, and the UE may assume the same or different values of $N_{RB}$ for DL and UL depending on the setting/indication (of the value).

The BS may set/indicate one value of $N_{RB}$, and the UE may assume the set/indicated value of $N_{RB}$ for all link directions (both UL/DL) or only for a portion of the link directions (UL only or DL only).

The value(s) of $N_{RB}$ set/indicated by the methods according to the embodiments may be applied to all DL/UL channels or only to a specific channel of the channels.

As an example of limiting the application of the set/indicated value(s) of $N_{RB}$ to some channel(s) of the DL/UL, the UE may assume the set/indicated value(s) of $N_{RB}$ only when transmitting PRACH on the UL. This may be intended to avoid performance issues that may arise in some PRACH formats if the preamble sequence cannot be transmitted entirely when assuming a conventional or pre-set value A of $N_{RB}$.

In such cases, for example, the UE may be configured to assume that $N_{RB}$ is the set/indicated value only when receiving a PDCCH (through CORESETO) in the case of DL. This configuration may be intended to address the issue that the control channel element (CCE) aggregation level (AL) is supported only up to 2 when $N_{RB}$ is assumed to be a conventional or preset value A. The PDCCH reception (through CORESETO) according to the embodiments includes PDCCH reception over the initial DL BWP, and PDCCH reception for Msg2/Msg4/MsgB reception.

In the example for DL, similar to PDCCH, the UE may be configured to assume that $N_{RB}$ is the set/indicated value only when receiving PDSCH (scheduled on PDCCH received through CORESETO). Alternatively, it may be configured to assume that $N_{RB}$ is the set/indicated value for PDSCH reception in the initial access procedure including Msg2/Msg4/MsgB reception.

Examples of applying the set/indicated value(s) of $N_{RB}$ according to the embodiments to only some DL/UL channel(s) may be applied separately or simultaneously.

The method of "applying the set/indicated value(s) of $N_{RB}$ according to the embodiments to only some channels" includes not only differentiation based on channels but also differentiation based on the RRC states (idle/inactive/connected) or BWP characteristics. Here, the "differentiation based on BWP characteristics" may be applied only to reception/transmission through the initial DL/UL BWP, or may be applied except for reception/transmission through the initial DL/UL BWP. Additionally, in the "differentiation based on BWP characteristics," the UE may assume that $N_{RB}$ is a conventional or preset value A for the MIB-configured initial DL BWP (i.e., CORESET0). Then, it may assume $N_{RB}$ is a value (e.g., A or B) set/indicated by the BS through SIB1 or dedicated/UE-specific RRC signaling for the initial DL/UL BWP (and subsequent DL/UL BWPs).

The method of applying the set/indicated value(s) of $N_{RB}$ according to the embodiments "only to some channels" includes determining an application status based on a determining an application status based on a property assigned to a specific channel. For example, the method may include determining the application status based on whether the waveform of a DL/UL channel is related to CD-OFDM or DFT-s-OFDM. More specifically, the BS may set the value of $N_{RB}$ to B using one of the methods in the embodiments, and apply the same only when the waveform of a specific UL channel is related to DFT-s-OFDM, i.e., when transform precoding is enabled. Alternatively, when the waveform of the specific UL channel is related to DFT-s-OFDM, B may be applied as the value of $N_{RB}$ regardless of the set/indicated value of $N_{RB}$. Here, the "specific UL channel" includes PUSCH and PUCCH, and the method may be applied to both PUSCH and PUCCH, or only to one of PUSCH and PUCCH. The application is limited to DFT-s-OFDM in such examples for the following reason. DFT-s-OFDM does not support 11 RBs, and thus when the value of $N_{RB}$ is 11, only up to 10 RBs may be used. In this situation, $N_{RB}$ may be set to 12 to allow all 12 RBs to be used.

As a method to apply the value of $N_{RB}$ determined by the BS/UE individually or only to specific DL/UL channel(s), the value of $N_{RB}$ determined by the BS or the information necessary for the UE to determine the value of $N_{RB}$ may be set for each of all or specific DL/UL channel(s), rather than setting a common value for all DL/UL channels. From the perspective of the BS, this method may enhance flexibility, but it may come with the drawback of increased signaling overhead. For example, in RACH configuration by broadcast signaling (e.g., SIB1), the information needed to determine the value of $N_{RB}$ the UE should assume for PRACH transmission may be configured/indicated. In the method of "applying the value of $N_{RB}$ "only to specific channels," the configuration/indication may be provided separately for the targeted channel(s)

In the case of DL, all or specific channel(s) to which $N_{RB}$ is applied may include PDSCH, PDCCH, and PBCH. Also, in the case of UL, the channel(s) may include PUSCH, PUCCH, and PRACH. Additionally, channels may be interpreted/applied as signals. That is, the channel(s) may include CSI-RS and DL PRS in the case of DL, and may include SRS in the case of UL.

According to the embodiments, based on generation of the maximum transmission BW and the corresponding transmission by the BS, the UE may receive information about the maximum transmission BW when receiving a downlink signal, based on a greater value of the maximum transmission BW. The UE may receive PDSCH, PDCCH, PBCH, and the like based on the maximum transmission BW generated by the method according to the embodiments. Additionally, in the case where the UE receives a signal based on the greater value of the maximum transmission BW, for example, when the maximum transmission BW is 12 RBs, the UE may receive/decode the PDSCH/CSI-RS and perform puncturing in PUSCH/PUCCH/SRS transmission.

A method and base station (BS) for transmitting a downlink (DL) signal according to embodiments may generate puncturing-related information related to operations according to embodiments, and provide a configuration/indication to the UE. A method user equipment (UE), processing device, and storage medium for receiving a DL signal according to embodiments may receive puncturing-related information and perform operations as follows.

As described above, to address the issues listed in Background #4, $N_{RB}$ defined as 11 for a combination of UE channel BW (in MHz) and SCS (in kHz) may be replaced with 12 or 12 may be additionally introduced. However, unconditionally allowing a larger maximum transmission BW for a specific UE channel BW may intensify interference between adjacent channels regardless of its scale, and thus may not be an undesirable solution depending on the network configuration. Accordingly, the BS may determine the value of maximum transmission BW for each UE channel BW based on specific conditions considering the network configuration, and set/indicate the determined value for the UE.

Setting/indicating, for the UE, the value of maximum transmission BW, i.e., the value of $N_{RB}$, for each UE channel BW as proposed above is an indirect or implicit indication method that causes the BS to provide necessary information to allow the UE to perform an appropriate operation according to the information. The BS may more directly configure/indicate UE operations using the following method.

A method/device according to embodiments may generate and configure/indicate puncturing-related information as follows.

Based on specific conditions (considering the network configuration), the BS may determine whether to perform puncturing for each UE channel BW and configure/indicate the determined puncturing-related information to the UE.

For DL, the puncturing-related information according to the embodiments may inform the UE that that the BS has performed DL channel/signal transmission by puncturing a portion of the entire channel/signal. For UL, it may instruct the UE to puncture a portion of the entire channel/signal for UL channel/signal transmission. The BS may transmit puncturing status information to the UE, and the UE may transmit puncturing status information to the BS. For example, the UE may puncture 1 RB out of 12 RBs.

The puncturing according to the embodiments may include a comprehensive meaning of the transmission operation performed by the BS/UE using part of the preconfigured/indicated resources. In this regard, puncturing may be interpreted and applied as rate matching. To provide more specific indications, puncturing-related information may include information for configuration/indication distinguished between puncturing and rate matching.

A method/device according to embodiments, for example, the BS method/device, may include and perform a method of generating puncturing-related information. The BS may use the specific conditions employed in the method of determining the maximum transmission BW for each UE channel BW as previously proposed, to determine whether to perform puncturing or generate puncturing-related information. For example, after applying the same conditions employed in the method of determining the maximum transmission BW for each UE channel BW, the BS may indicate puncturing on the condition that $N_{RB}$ is determined to be A, and indicate no puncturing on the condition that $N_{RB}$ is determined to be B. Unless otherwise specified, refer to examples in Method #1 for the values of $N_{RB}$, A and B. That is, when $N_{RB}$ should be set lower considering the impact on adjacent carriers/channels, it may be used to indicate puncturing.

A method/device according to embodiments includes a method of configuring/indicating puncturing-related information. The UE may operate according to the puncturing-related information as follows.

The BS may configure/indicate the puncturing-related information generated with the method according to the embodiments to the UE fully or in a necessary case. The necessary case may be, for example, when actual puncturing is determined by such conditions.

The BS may configure/indicate the puncturing-related information alone to replace $N_{RB}$ setting/indication information, or configure the same for the UE to refer to in combination with $N_{RB}$ setting/indication information. For example, the BS may semi-statically set/indicate $N_{RB}$ as 12 and allow only 11 RBs to be used for all or part of the channel(s)/signal(s) (at a specific time) through the puncturing-related information.

The BS may set/indicate $N_{RB}$ for the UE through broadcast signaling or dedicated/UE-specific RRC signaling. The puncturing-related information may be configured/indicated in the same manner as the $N_{RB}$ setting/indication information, or may be configured for the UE through dynamic signaling (e.g., DCI, MAC CE, MAC message) to respond dynamically to network situations (e.g., interference, changes in network configuration).

The BS may use PDSCH/PUSCH scheduling DCI for dynamic signaling of the puncturing-related information through DCI. In this case, the UE determines whether to apply puncturing based on the puncturing-related information indicated by DCI when receiving PDSCH/PUSCH scheduling DCI through the PDSCH/CSI-RS reception or transmitting PUSCH/PUCCH/SRS. Based on the determination, it performs PDSCH/CSI-RS reception/decoding, or performs puncturing in PUSCH/PUCCH/SRS transmission.

Alternatively, the BS may configure/indicate puncturing-related information for multiple UEs simultaneously using group-common DCI for dynamic signaling of the puncturing-related information through DCI. This method may be used to configure/indicate puncturing-related information for UEs with a maximum transmission BW, $N_{RB}$, equal to 11 RBs simultaneously or dynamically use only 11 RBs out of 12 RBs by puncturing 1 RB depending on network conditions. Thereby, signaling overhead may be reduced.

Such information may be configured/indicated based on the UE type. For example, for a UE type with a maximum UE BW of 5 MHz, puncturing-related information for DL reception/UL transmission through a 5 MHz UE channel BW may be configured/indicated through separate configuration (e.g., separate SIB1, UE-specific/dedicated RRC signaling).

Also, such information may be included in BWP configuration information. For example, for a UE type with a maximum UE BW of 5 MHz, the (initial) DL/UL BWP may be set to 5 MHz, namely the value of $N_{RB}$ corresponding to the 5 MHz UE channel BW. At the same time, puncturing-related information to be used in DL reception/UL transmission through the set (initial) DL/UL BWP may be configured/indicated.

The BS may determine whether to perform puncturing for each UE channel BW based on specific conditions (considering network configurations) and transmit the determined puncturing-related information to the UE. The puncturing-related information may include indications for DL and UL. In the case of DL, the BS may puncture part of the entire channel/signal during DL channel/signal transmission and provide the UE with the puncturing-related information indicating that puncturing has been applied. In the case of UL, the UE may puncture part of the entire channel/signal during UL channel/signal transmission. This may be indicated by the puncturing-related information. The puncturing according to the embodiments may be replaced with rate matching. The puncturing according to the embodiments may be described as performing resource matching during signal transmission but not performing transmission or as not counting REs during the RE matching. For example, the BS or UE may puncture 1 RB out of 12 RBs.

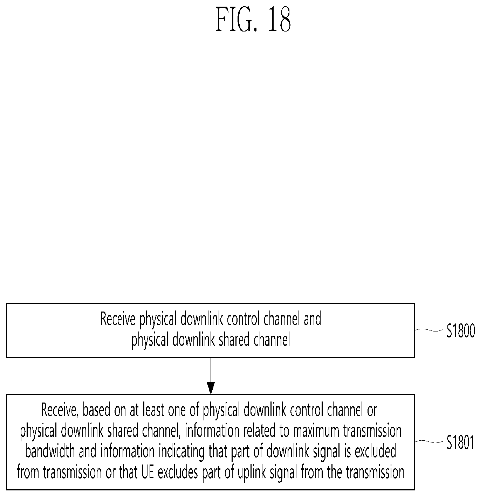

FIG. 18 illustrates an example flow of UL signal transmission by a UE according to embodiments.

The UE (which may be referred to as a terminal, user device, etc.) according to the embodiments may correspond to the user devices in FIGS. 1 to 10. Based on FIGS. 11 to 17, the UE according to the embodiments may a downlink (DL) signal and transmit an uplink (UL) signal.

S1800: A DL signal reception method according to embodiments may include receiving a physical downlink control channel and a physical downlink shared channel on a cell.

S1801: The method of receiving a DL signal according to the embodiments may further include receiving, based on at least one of the physical downlink control channel or the physical downlink shared channel, information related to a maximum transmission bandwidth and information indicating that part of the downlink signal is excluded from transmission or that the UE excludes part of an uplink signal from the transmission.

The UE may determine whether to apply puncturing based on the puncturing-related information indicated by DCI when receiving PDSCH/PUSCH scheduling DCI through the PDSCH/CSI-RS reception or transmitting PUSCH/-PUCCH/SRS, and may perform PDSCH/CSI-RS reception/decoding based on the determination. The UE may perform puncturing in PUSCH/PUCCH/SRS transmission.

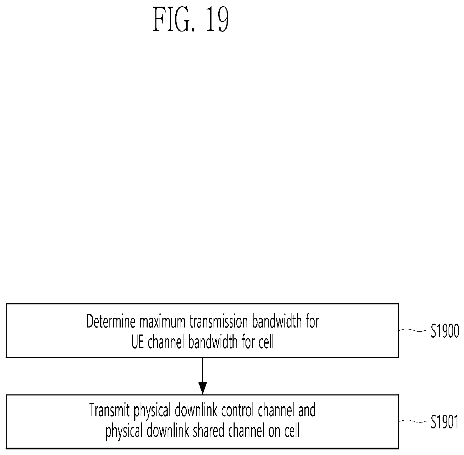

FIG. 19 illustrates an example flow of DL signal transmission by a BS according to embodiments.

The BS (Base Station) according to the embodiments represents a BS that transmits and receives signals to and from the user devices in FIGS. 1 to 10. Based on FIGS. 11 to 17, the BS according to the embodiments may transmit DL signals as follows.

S1900: A DL signal transmission method according to embodiments may include determining a maximum transmission bandwidth for a UE channel bandwidth for a cell.

S1901: The DL signal transmission method according to the embodiments may further include transmitting a physical downlink control channel and a physical downlink shared channel on the cell.

For example, regarding the method of determining the maximum transmission BW for each UE channel BW, the method and UE operation for setting/indicating the maximum transmission BW for each UE channel BW, and the method and UE operation for configuring/indicating puncturing-related information according to embodiments, a method of transmitting a downlink signal by a base station in a wireless communication system includes determining a maximum transmission bandwidth for a user equipment (UE) channel bandwidth for a cell, and transmitting a physical downlink control channel and a physical downlink shared channel on the cell, wherein, based on at least one of the physical downlink control channel or the physical downlink shared channel, information related to the determined maximum transmission bandwidth and information indicating that part of the downlink signal is excluded from the transmission or that a UE excludes part of an uplink signal from the transmission are transmitted, wherein the maximum transmission bandwidth is determined to be a value greater than a predefined specific value based on the UE channel bandwidth and subcarrier spacings (SCSs). The physical downlink control channel may be referred to as a control channel, a first physical channel, or the like. The physical downlink shared channel may be referred to as a shared channel, a second physical channel, or the like.

For example, regarding the maximum transmission BW ($N_{RB}$) for each UE channel BW as defined in NR spec TR 38.101-1, the maximum transmission BW may be set to a value greater than 11 $N_{RB}$ generated based on the 30 SCS and 5 MHz.

Regarding the method of determining the maximum transmission bandwidth based on whether the entire carrier BW is used as a UE channel BW according to the embodiments, the determining of the maximum transmission bandwidth for each UE channel bandwidth may include determining the maximum transmission bandwidth as a value greater than a predetermined value based on the maximum transmission bandwidth not being allocated to any carrier bandwidth. In other words, when the maximum transmission bandwidth is less than the carrier bandwidth, the maximum transmission bandwidth is determined as a value greater than a predetermined value.

Regarding the method of determining the maximum transmission bandwidth based on the relative position of the UE channel within the carrier BW, the determining of the maximum transmission bandwidth for each UE channel bandwidth may include determining the maximum transmission bandwidth as a value greater than a specific value based on the maximum transmission bandwidth not being allocated to an edge of the carrier bandwidth. In other words, based on the relative position of the carrier BW, the UE channel may be placed on at least one side (edge) of the carrier BW, and the BS may set the maximum transmission bandwidth to a value greater than 11 $N_{RB}$ at 30 SCS, 5 MHz. In the case where the maximum transmission bandwidth is less than the carrier bandwidth and allocated within the carrier bandwidth rather than at an edge of the carrier bandwidth, it is determined as a value greater than the specific value.

Regarding the method of determining the maximum transmission bandwidth based on the relative positions of the UE channels within the carrier BW, the determining of the maximum transmission bandwidth for each UE channel bandwidth may include, based on a carrier bandwidth being configured without a guardband for UEs with different SCSs included therein, determining the maximum transmission bandwidth to be the value greater than the specific value. In other words, in the case where the carrier BW includes UE channels for at least two or more UEs with different numerologies, such as different SCSs and CPs, their relative positions within the BW may be taken into account. When the UE channels for multiple UEs are located at different positions within the carrier BW, for example, when a guardband is present, the maximum transmission bandwidth may be set to a value greater than the generated specific value. In other words, when the carrier bandwidth does not include a guardband for UEs with different SCSs, the maximum transmission bandwidth is determined to be a value greater than the specific value.

Regarding the method of setting/indicating the maximum transmission BW for each UE channel BW, the BS may transmit information related to the determined maximum transmission bandwidth for each UE channel bandwidth. The UE may receive the relevant information from the BS and receive and decode the necessary data based on the maximum transmission bandwidth. In other words, the information related to the determined maximum transmission bandwidth is transmitted based on the physical broadcast channel for the cell.

Regarding the puncturing configuration according to the embodiments, part of the downlink signal may be punctured based on the determined maximum transmission bandwidth for each UE channel bandwidth. The BS may determine whether to perform puncturing for each UE channel. It may transmit the determined puncturing-related information to the UE. The BS may puncture part of the DL channel/signal and transmit puncturing indication information to the UE in transmitting the DL channel/signal. The UE may puncture and transmit part of the UL channel/signal in transmitting the UL channel/signal. According to embodiments, besides the puncturing, rate matching may also be performed. The UE determines whether to apply puncturing based on the puncturing-related information indicated by DCI when receiving PDSCH/PUSCH scheduling DCI through the PDSCH/CSI-RS reception or transmitting PUSCH/-PUCCH/SRS. Based on the determination, it performs PDSCH/CSI-RS reception/decoding, or performs puncturing in PUSCH/PUCCH/SRS transmission. In other words, the BS excludes part of the DL signal from transmission on the cell based on the information, or the UE excludes part of the UL signal from transmission on the cell based on the information. The information is transmitted through a downlink control indicator configured to schedule the physical downlink shared channel or through a group-common downlink control indicator.

The DL signal transmission method may be performed by a downlink signal transmission device, for example, a BS. A BS for transmitting a downlink signal in a wireless communication system includes at least one transceiver, at least one processor, and at least one computer memory operably connected to the at least one processor and storing instructions that, when executed, cause the at least one processor to perform operations. The operations include determining a maximum transmission bandwidth for a user equipment (UE) channel bandwidth for a cell, and transmitting a physical downlink control channel and a physical downlink shared channel on the cell. Based on at least one of the physical downlink control channel or the physical downlink shared channel, information related to the determined maximum transmission bandwidth and information indicating that part of the downlink signal is excluded from the transmission or that a UE excludes part of an uplink signal from the transmission are transmitted. The maximum transmission bandwidth is determined to be a value greater than a predefined specific value based on the UE channel bandwidth and subcarrier spacings (SCSs).

Based on the determined maximum transmission bandwidth according to the embodiments, the UE may receive a DL signal and transmit UL signal. In receiving the DL signal, the UE may receive a punctured signal from the BS. It may also receive puncturing-related information from the BS and perform puncturing in transmitting the UL signal. A method of receiving a downlink signal by a UE in a wireless communication system includes receiving a physical downlink control channel and a physical downlink shared channel on a cell, and receiving, based on at least one of the physical downlink control channel or the physical downlink shared channel, information related to a maximum transmission bandwidth and information indicating that part of the downlink signal is excluded from transmission or that the UE excludes part of an uplink signal from the transmission. The maximum transmission bandwidth is determined to be a value greater than a predefined specific value based on the UE channel bandwidth and SCSs. The physical downlink control channel may be referred to as a control channel and be designated as PDCCH (Physical Downlink Control Channel). The physical downlink shared channel may be referred to as a shared channel and be designated as PDSCH (Physical Downlink Shared Channel).

The UL signal transmission method according to the embodiments may be performed by a UE. A UE for receiving a downlink signal in a wireless communication system includes at least one transceiver, at least one processor, and at least one computer memory operably connected to the at least one processor and storing instructions that, when executed, cause the at least one processor to perform operations. The operations include receiving a physical downlink control channel and a physical downlink shared channel on a cell, and receiving, based on at least one of the physical downlink control channel or the physical downlink shared channel, information related to a maximum transmission bandwidth and information indicating that part of the downlink signal is excluded from transmission or that the UE excludes part of an uplink signal from the transmission. The maximum transmission bandwidth is determined to be a value greater than a predefined specific value based on the UE channel bandwidth and SCSs.

According to embodiments, provided herein is a computer-readable storage medium storing at least one program code including instructions that, when executed, cause the at least one processor to perform operations. The operations include receiving a physical downlink control channel and a physical downlink shared channel on a cell, and receiving, based on at least one of the physical downlink control channel or the physical downlink shared channel, information related to a maximum transmission bandwidth and information indicating that part of the downlink signal is excluded from transmission or that the UE excludes part of an uplink signal from the transmission. The maximum transmission bandwidth is determined to be a value greater than a predefined specific value based on the UE channel bandwidth and SCSs.

According to embodiments, provided herein is a processing device in a wireless communication system, including at least one processor, and at least one computer memory operably connected to the at least one processor and storing instructions that, when executed, cause the at least one processor to perform operations. The operations include receiving a physical downlink control channel and a physical downlink shared channel on a cell, and receiving, based on at least one of the physical downlink control channel or the physical downlink shared channel, information related to a maximum transmission bandwidth and information indicating that part of the downlink signal is excluded from transmission or that the UE excludes part of an uplink signal from the transmission. The maximum transmission bandwidth is determined to be a value greater than a predefined specific value based on the UE channel bandwidth and SCSs.

Embodiments may effectively support various 5G use cases (e.g., IoT, wearables, etc.) in 5G in terms of cost/complexity. UE types with reduced cost/complexity may have different maximum bandwidths (e.g., 100 MHz, 20 MHz, 5 MHz,...), which may be effectively supported. In scenarios where UE types with different bandwidth capabilities are supported on the same cell/carrier, the inefficiency of the conventional method of defining and using a single value of maximum transmission BW (NRB) for each channel BW in consideration of the influence of adjacent carriers/channels may be effectively resolved. To support various use cases in 5G, UE types with different BW capabilities may be supported on the same carrier/cell, and spectrum efficiency may be increased.

The embodiments have been described in terms of a method and/or a device. The description of the method and the description of the device may complement each other.

Although embodiments have been described with reference to each of the accompanying drawings for simplicity, it is possible to design new embodiments by merging the embodiments illustrated in the accompanying drawings. If a recording medium readable by a computer, in which programs for executing the embodiments mentioned in the foregoing description are recorded, is designed by those skilled in the art, it may also fall within the scope of the appended claims and their equivalents. The devices and methods may not be limited by the configurations and methods of the embodiments described above. The embodiments described above may be configured by being selectively combined with one another entirely or in part to enable various modifications. Although preferred embodiments have been described with reference to the drawings, those skilled in the art will appreciate that various modifications and variations may be made in the embodiments without departing from the spirit or scope of the disclosure described in the appended claims. Such modifications are not to be understood individually from the technical idea or perspective of the embodiments.

Various elements of the devices of the embodiments may be implemented by hardware, software, firmware, or a combination thereof. Various elements in the embodiments may be implemented by a single chip, for example, a single hardware circuit. According to embodiments, the components according to the embodiments may be implemented as separate chips, respectively. According to embodiments, at least one or more of the components of the device according to the embodiments may include one or more processors capable of executing one or more programs. The one or more programs may perform any one or more of the operations/methods according to the embodiments or include instructions for performing the same. Executable instructions for performing the method/operations of the device according to the embodiments may be stored in a non-transitory CRM or other computer program products configured to be executed by one or more processors, or may be stored in a transitory CRM or other computer program products configured to be executed by one or more processors. In addition, the memory according to the embodiments may be used as a concept covering not only volatile memories (e.g., RAM) but also nonvolatile memories, flash memories, and PROMs. In addition, it may also be implemented in the form of a carrier wave, such as transmission over the Internet. In addition, the processor-readable recording medium may be distributed to computer systems connected over a network such that the processor-readable code may be stored and executed in a distributed fashion.

In this document, the term "/" and "," should be interpreted as indicating "and/or." For instance, the expression "A/B" may mean "A and/or B." Further, "A, B" may mean "A and/or B." Further, "A/B/C" may mean "at least one of A, B, and/or C." "A, B, C" may also mean "at least one of A, B, and/or C." Further, in the document, the term "or" should be interpreted as "and/or." For instance, the expression "A or B" may mean 1) only A, 2) only B, and/or 3) both A and B. In other words, the term "or" in this document should be interpreted as "additionally or alternatively."

Terms such as first and second may be used to describe various elements of the embodiments. However, various components according to the embodiments should not be limited by the above terms. These terms are only used to distinguish one element from another. For example, a first user input signal may be referred to as a second user input signal. Similarly, the second user input signal may be referred to as a first user input signal. Use of these terms should be construed as not departing from the scope of the various embodiments. The first user input signal and the second user input signal are both user input signals, but do not mean the same user input signal unless context clearly dictates otherwise.

The terminology used to describe the embodiments is used for the purpose of describing particular embodiments only and is not intended to be limiting of the embodiments. As used in the description of the embodiments and in the claims, the singular forms "a", "an", and "the" include plural referents unless the context clearly dictates otherwise. The expression "and/or" is used to include all possible combinations of terms. The terms such as "includes" or "has" are intended to indicate existence of figures, numbers, steps, elements, and/or components and should be understood as not precluding possibility of existence of additional existence of figures, numbers, steps, elements, and/or components. As used herein, conditional expressions such as "if" and "when" are not limited to an optional case and are intended to be interpreted, when a specific condition is satisfied, to perform the related operation or interpret the related definition according to the specific condition.

Operations according to the embodiments described in this specification may be performed by a transmission/-

reception device including a memory and/or a processor according to embodiments. The memory may store programs for processing/controlling the operations according to the embodiments, and the processor may control various operations described in this specification. The processor may be referred to as a controller or the like. In embodiments, operations may be performed by firmware, software, and/or combinations thereof. The firmware, software, and/or combinations thereof may be stored in the processor or the memory.

The operations according to the above-described embodiments may be performed by the transmission device and/or the reception device according to the embodiments. The transmission/reception device may include a transmitter/receiver configured to transmit and receive media data, a memory configured to store instructions (program code, algorithms, flowcharts and/or data) for the processes according to the embodiments, and a processor configured to control the operations of the transmission/reception device.

The processor may be referred to as a controller or the like, and may correspond to, for example, hardware, software, and/or a combination thereof. The operations according to the above-described embodiments may be performed by the processor. In addition, the processor may be implemented as an encoder/decoder for the operations of the above-described embodiments.

[Mode for Disclosure]

As described above, related details have been described in the best mode for carrying out the embodiments.

[Industrial Applicability]

As described above, the embodiments are fully or partially applicable to a wireless communication system.

Those skilled in the art may change or modify the embodiments in various ways within the scope of the embodiments.

Embodiments may include variations/modifications within the scope of the claims and their equivalents.

**Claims**

1. A method of transmitting a downlink signal by a base station in a wireless communication system, the method comprising:

   determining a maximum transmission bandwidth for a user equipment (UE) channel bandwidth for a cell; and
   transmitting a physical downlink control channel and a physical downlink shared channel on the cell,
   wherein, based on at least one of the physical downlink control channel or the physical downlink shared channel, information related to the determined maximum transmission bandwidth and information indicating that part of the downlink signal is excluded from the transmission or that a UE excludes part of an uplink signal from the transmission are transmitted,
   wherein the maximum transmission bandwidth is determined to be a value greater than a predefined specific value based on the UE channel bandwidth and subcarrier spacings (SCSs).

2. The method of claim 1, wherein, based on the maximum transmission bandwidth being less than a carrier bandwidth, the maximum transmission bandwidth is determined to be the value greater than the specific value.

3. The method of claim 1, wherein, based on the maximum transmission bandwidth being less than a carrier bandwidth and allocated within the carrier bandwidth but not to an edge of the carrier bandwidth, the maximum transmission bandwidth is determined to be the value greater than the specific value.

4. The method of claim 1, wherein, based on a carrier bandwidth being configured without a guardband for UEs with different SCSs included therein, the maximum transmission bandwidth is determined to be the value greater than the specific value.

5. The method of claim 1, wherein information related to the determined maximum transmission bandwidth is transmitted based on the physical broadcast channel for the cell.

6. The method of claim 1, wherein:

   based on the information, the base station excludes part of the downlink signal from the transmission on the cell; or

based on the information, the UE excludes part of an uplink signal from the transmission on the cell, wherein the information is transmitted through a downlink control indicator configured to schedule the physical downlink shared channel or through a group-common downlink control indicator.

7. A base station for transmitting a downlink signal in a wireless communication system, comprising:

at least one transceiver;
at least one processor; and
at least one computer memory operably connected to the at least one processor and storing instructions that, when executed, cause the at least one processor to perform operations, the operations comprising:

determining a maximum transmission bandwidth for a user equipment (UE) channel bandwidth for a cell; and
transmitting a physical downlink control channel and a physical downlink shared channel on the cell, wherein, based on at least one of the physical downlink control channel or the physical downlink shared channel, information related to the determined maximum transmission bandwidth and information indicating that part of the downlink signal is excluded from the transmission or that a UE excludes part of an uplink signal from the transmission are transmitted,
wherein the maximum transmission bandwidth is determined to be a value greater than a predefined specific value based on the UE channel bandwidth and subcarrier spacings (SCSs).

8. The base station of claim 7, wherein, based on the maximum transmission bandwidth being less than a carrier bandwidth, the maximum transmission bandwidth is determined to be the value greater than the specific value.

9. The base station of claim 7, wherein, based on the maximum transmission bandwidth being less than a carrier bandwidth and allocated within the carrier bandwidth but not to an edge of the carrier bandwidth, the maximum transmission bandwidth is determined to be the value greater than the specific value.

10. The base station of claim 7, wherein, based on a carrier bandwidth being configured without a guardband for UEs with different SCSs included therein, the maximum transmission bandwidth is determined to be the value greater than the specific value.

11. The base station of any one of claims 8 to 10, wherein the base station transmits information related to the determined maximum transmission bandwidth based on the physical broadcast channel for the cell.

12. The base station of claim 7, wherein:

based on the information, the base station excludes part of the downlink signal from the transmission on the cell; or
based on the information, the UE excludes part of an uplink signal from the transmission on the cell, wherein the information is transmitted through a downlink control indicator configured to schedule the physical downlink shared channel or through a group-common downlink control indicator.

13. A method of receiving a downlink signal by a user equipment (UE) in a wireless communication system, the method comprising:

receiving a physical downlink control channel and a physical downlink shared channel on a cell; and
receiving, based on at least one of the physical downlink control channel or the physical downlink shared channel, information related to a maximum transmission bandwidth and information indicating that part of the downlink signal is excluded from transmission or that the UE excludes part of an uplink signal from the transmission, wherein the maximum transmission bandwidth is determined to be a value greater than a predefined specific value based on the UE channel bandwidth and subcarrier spacings (SCSs).

14. The method of claim 13, wherein, based on the maximum transmission bandwidth being less than a carrier bandwidth, the maximum transmission bandwidth is determined to be the value greater than the specific value.

15. A user equipment (UE) for receiving a downlink signal in a wireless communication system, comprising:

at least one transceiver;
at least one processor; and

at least one computer memory operably connected to the at least one processor and storing instructions that, when executed, cause the at least one processor to perform operations, the operations comprising:

receiving a physical downlink control channel and a physical downlink shared channel on a cell; and receiving, based on at least one of the physical downlink control channel or the physical downlink shared channel, information related to a maximum transmission bandwidth and information indicating that part of the downlink signal is excluded from transmission or that the UE excludes part of an uplink signal from the transmission,

wherein the maximum transmission bandwidth is determined to be a value greater than a predefined specific value based on the UE channel bandwidth and subcarrier spacings (SCSs).

# FIG. 1

FIG. 2

108     208

100

**First Device**

| | |
|---|---|
| 102 | 106 |
| Processor(s) | Transceiver(s) |

104
Memory(s)

200

**Second Device**

| | |
|---|---|
| 206 | 202 |
| Transceiver(s) | Processor(s) |

204
Memory(s)

FIG. 3

# FIG. 4

Device (100, 200)

Communication unit (110)
(e.g., 5G communication unit)

Communication circuit (112)
(e.g., processor(s), memory(s))

Transceiver(s) (114)
(e.g., RF unit(s), antenna(s))

Control unit (120)
(e.g., processor(s))

Memory unit (130)
(e.g., RAM, storage)

Additional components (140)
(e.g., power unit/battery, I/O unit
driving unit, computing unit)

FIG. 5

# FIG. 6

Vehicle or autonomous driving vehicle (100)

Communication unit (110)

Control unit (120)

Memory unit (130)

Driving unit (140a)

Power supply unit (140b)

Sensor unit (140c)

Autonomous driving unit (140d)

108

208

Device (100, 200)

Communication unit (210)

Control unit (220)

Memory unit (230)

Driving unit (140a)

Power supply unit (140b)

Sensor unit (140c)

Autonomous driving unit (140d)

# FIG. 7

Vehicle or autonomous driving vehicle (100)

1410

1420

Virtual World

Communication unit (110)

Control unit (120)

Memory unit (130)

I/O unit (140a)
(e.g., HUD)

Positioning unit (140b)
(e.g., GPS, sensor)

# FIG. 8

XR device (100a)

Communication unit (110)

Control unit (120)

Memory unit (130)

I/O unit (140a)

Sensor unit (140b)

Power supply unit (140c)

# FIG. 9

Robot (100)

| |
|---|
| Communication unit (110) |
| Control unit (120) |
| Memory unit (130) |
| I/O unit (140a) |
| Sensor unit (140b) |
| Driving unit (140c) |

FIG. 10

100

110 — Communication unit ⟷ Control unit ⟷ Memory unit — 130

120

140a — Input unit ⟷ Control unit ⟷ Output unit — 140b

140c — Leaning processor unit ⟷ Control unit ⟷ Sensor unit — 140d

# FIG. 11

# FIG. 12

1 subframe = $14 \cdot 2^{\mu}$ OFDM symbols

$k = N^{size, \mu}_{grid} N^{RB}_{sc} - 1$

$N^{size, \mu}_{grid} N^{RB}_{sc}$ subcarriers

1 resource block = $N^{RB}_{sc}$ subcarriers

Resource element (k,l)

k = 0

l = 0

$l = 14 \cdot 2^{?} - 1$

# FIG. 13

INITIAL CELL SEARCH

SYSTEM INFORMATION RECEPTION

RANDOM ACCESS PROCEDURE

CENERAL DL/UL Tx/Rx

P/S - SCH & [DLRS] & PBCH

PDCCH/ PDSCH (BCCH)

PRACH | PDCCH/ PDSCH | PUSCH | PDCCH/ PDSCH

PDCCH/ PDSCH | PUSCH PDCCH

S201   S202   S203  S204   S205  S206   S207   S208

· DL/UL ACK/NACK
· UE CQI/PMI/RI REPORT
· USING PUSCH AND PUCCH

# FIG. 14

# FIG. 15

SSB periodicity (default : 20ms)

5ms window

SSB#1  SSB#2  · · ·  SSB#L

SSB burst set

# FIG. 16

```
┌──────┐                                              ┌──────┐
│  UE  │                                              │  BS  │
└──────┘                                              └──────┘
   │                                                     │
   │          Msg1 : random access preamble              │
1701──────────────────────────────────────────────────▶ │
   │                                                     │
   │          Msg2 : random access response              │
1703 ◀────────────────────────────────────────────────  │
   │                                                     │
   │      Msg3 : scheduled transmission on PUSCH          │
1705──────────────────────────────────────────────────▶ │
   │                                                     │
   │          Msg4 : contention resolution               │
1707 ◀────────────────────────────────────────────────  │
   │                                                     │
   ▼                                                     ▼
```

(a)

Msg.2 : RA response        Msg.4 : RRC connection setup

BS

No response    No response

Power Ramping    Power Ramping    . . .

UE

Msg.1    Msg.3 : RRC connection Request    RRC connectecd

(b)

FIG. 17

(1) CBRA with 2 step RA type

(2) CFRA with 2 step RA type

# FIG. 18

| |
|---|
| Receive physical downlink control channel and physical downlink shared channel |

S1800

| |
|---|
| Receive, based on at least one of physical downlink control channel or physical downlink shared channel, information related to maximum transmission bandwidth and information indicating that part of downlink signal is excluded from transmission or that UE excludes part of uplink signal from the transmission |

S1801

FIG. 19

| Determine maximum transmission bandwidth for UE channel bandwidth for cell | ～S1900 |

| Transmit physical downlink control channel and physical downlink shared channel on cell | ～S1901 |

## INTERNATIONAL SEARCH REPORT

| International application No. |
| --- |
| **PCT/KR2023/011969** |

| A. | CLASSIFICATION OF SUBJECT MATTER |
| --- | --- |
| | **H04W 72/04**(2009.01)i; **H04W 72/23**(2023.01)i; **H04L 27/26**(2006.01)i; **H04W 88/02**(2009.01)i |

According to International Patent Classification (IPC) or to both national classification and IPC

| B. | FIELDS SEARCHED |
| --- | --- |

Minimum documentation searched (classification system followed by classification symbols)

H04W 72/04(2009.01); H04L 5/00(2006.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: maximum transmission bandwidth, UE channel bandwidth, subcarrier spacing, PDCCH, PDSCH, puncturing

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | US 2020-0280962 A1 (HUAWEI TECHNOLOGIES CO., LTD.) 03 September 2020 (2020-09-03)<br>See paragraphs [0139]-[0254]; and figures 6, 8 and 18. | 1-15 |
| A | US 2021-0185702 A1 (SAMSUNG ELECTRONICS CO., LTD.) 17 June 2021 (2021-06-17)<br>See paragraphs [0104]-[0125]; and figures 8-9. | 1-15 |
| A | CHINA TELECOM. Discussion on SIB1 channel bandwidth and channel raster issue. R4-2211567, 3GPP TSG-RAN WG4 Meeting #104-e. 09 August 2022.<br>See sections 1-2.2. | 1-15 |
| A | US 2022-0150008 A1 (NOKIA TECHNOLOGIES OY) 12 May 2022 (2022-05-12)<br>See paragraphs [0061]-[0063]. | 1-15 |
| A | WO 2022-152906 A1 (TELEFONAKTIEBOLAGET LM ERICSSON (PUBL)) 21 July 2022 (2022-07-21)<br>See page 9. | 1-15 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **22 November 2023** | **22 November 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

# EP 4 572 472 A1

**INTERNATIONAL SEARCH REPORT**
Information on patent family members

International application No.

**PCT/KR2023/011969**

| Patent document cited in search report | | | Publication date (day/month/year) | Patent family member(s) | | | Publication date (day/month/year) |
|---|---|---|---|---|---|---|---|
| US | 2020-0280962 | A1 | 03 September 2020 | CN | 109587799 | A | 05 April 2019 |
| | | | | CN | 109587799 | B | 18 July 2023 |
| | | | | EP | 3654716 | A1 | 20 May 2020 |
| | | | | US | 11490370 | B2 | 01 November 2022 |
| | | | | WO | 2019-062415 | A1 | 04 April 2019 |
| US | 2021-0185702 | A1 | 17 June 2021 | AU | 2019-207084 | A1 | 05 March 2020 |
| | | | | AU | 2019-207084 | B2 | 12 January 2023 |
| | | | | CN | 111557115 | A | 18 August 2020 |
| | | | | EP | 3673699 | A1 | 01 July 2020 |
| | | | | KR | 10-2019-0086152 | A | 22 July 2019 |
| | | | | KR | 10-2547263 | B1 | 22 June 2023 |
| | | | | US | 10708931 | B2 | 07 July 2020 |
| | | | | US | 10939458 | B2 | 02 March 2021 |
| | | | | US | 11606801 | B2 | 14 March 2023 |
| | | | | US | 2019-0223191 | A1 | 18 July 2019 |
| | | | | US | 2020-0337064 | A1 | 22 October 2020 |
| | | | | WO | 2019-139368 | A1 | 18 July 2019 |
| US | 2022-0150008 | A1 | 12 May 2022 | CN | 113678534 | A | 19 November 2021 |
| | | | | EP | 3925345 | A1 | 22 December 2021 |
| | | | | EP | 3925345 | A4 | 14 September 2022 |
| | | | | JP | 2022-520644 | A | 31 March 2022 |
| | | | | JP | 7288966 | B2 | 08 June 2023 |
| | | | | WO | 2020-165487 | A1 | 20 August 2020 |
| WO | 2022-152906 | A1 | 21 July 2022 | CA | 3205180 | A1 | 21 July 2022 |

Form PCT/ISA/210 (patent family annex) (July 2022)

54

**REFERENCES CITED IN THE DESCRIPTION**

**Non-patent literature cited in the description**

- Physical channels and modulation. *3GPP TS 38.211*
- Multiplexing and channel coding. *3GPP TS 38.212*
- Physical layer procedures for control. *3GPP TS 38.213*
- Physical layer procedures for data. *3GPP TS 38.214*
- Physical layer measurements. *3GPP TS 38.215*
- NR and NG-RAN Overall Description. *3GPP TS 38.300*
- User Equipment (UE) procedures in idle mode and in RRC inactive state. *3GPP TS 38.304*
- Medium Access Control (MAC) protocol. *3GPP TS 38.321*
- Radio Link Control (RLC) protocol. *3GPP TS 38.322*
- Packet Data Convergence Protocol (PDCP). *3GPP TS 38.323*
- Radio Resource Control (RRC) protocol. *3GPP TS 38.331*
- Service Data Adaptation Protocol (SDAP). *3GPP TS 37.324*
- Multi-connectivity; Overall description. *3GPP TS 37.340*
- Application layer support for V2X services; Functional architecture and information flows. *3GPP TS 23.287*
- System Architecture for the 5G System. *3GPP TS 23.501*
- Procedures for the 5G System. *3GPP TS 23.502*
- Policy and Charging Control Framework for the 5G System; Stage 2. *3GPP TS 23.503*
- Non-Access-Stratum (NAS) protocol for 5G System (5GS); Stage 3. *3GPP TS 24.501*
- Access to the 3GPP 5G Core Network (5GCN) via non-3GPP access networks. *3GPP TS 24.502*
- User Equipment (UE) policies for 5G System (5GS); Stage 3. *3GPP TS 24.526*